# EUROPEAN PATENT SPECIFICATION

(11) **EP 4 421 602 B1**
(45) Date of publication and mention of the grant of the patent: **17.06.2026**
(21) Application number: 22909726.6
(22) Date of filing: 06.12.2022
(51) Int. Cl.: G06F 3/04817, G06F 3/0488, G06F 3/04883, G06F 3/0486, G06F 9/451, G06F 3/04842, G06F 3/04886

(54) **MANAGEMENT METHOD FOR APPLICATION CARD, ELECTRONIC DEVICE, AND STORAGE MEDIUM**
VERWALTUNGSVERFAHREN FÜR ANWENDUNGSKARTE, ELEKTRONISCHE VORRICHTUNG UND SPEICHERMEDIUM
PROCÉDÉ DE GESTION POUR CARTE D'APPLICATION, DISPOSITIF ÉLECTRONIQUE ET SUPPORT DE STOCKAGE

(30) Priority: 21.12.2021 CN 202111569661
(43) Date of publication of application: 28.08.2024
(73) Proprietor: Huawei Technologies Co., Ltd., Shenzhen, Guangdong 518129 (CN)
(72) Inventor: LI, Minhao, Shenzhen, Guangdong 518129 (CN)
(74) Representative: Körber, Martin Hans
(86) International application number: PCT/CN2022/136794
(87) International publication number: WO 2023/116411

(56) References cited:
- EP-A1- 4 357 892
- CN-A- 101 833 417
- CN-A- 103 970 400
- CN-A- 104 978 113
- CN-A- 110 221 762
- CN-A- 110 750 317
- CN-A- 113 325 985
- CN-A- 114 860 136
- US-A1- 2008 235 602
- US-A1- 2015 012 853
- US-A1- 2015 346 957

## Description

### TECHNICAL FIELD

This application relates to the field of terminal technologies, and in particular, to an application widget management method, an electronic device, and a storage medium.

### BACKGROUND

Document US 2015/346957 A1 discloses a device, a method and a graphical user interface for displaying widgets. In an era of smart devices, with improvement of living standards and quality, travel scenarios such as driving or riding become increasingly important in people's lives. People also have more intelligent requirements for terminals such as a head unit. Usability and intelligence of the head unit have become an important criterion for people to evaluate a vehicle, and operation convenience of a desktop application in the head unit is a key reference for evaluating the head unit.

### SUMMARY

The present invention is defined by the application widget display method of independent claim 1, the electronic device of independent claim 9 and the computer-readable storage medium of independent claim 10. Additional features of the invention are presented in the dependent claims. In the following, parts of the description and drawings referring to embodiments, which are not covered by the claims, are not presented as embodiments of the invention, but as examples useful for understanding the invention.

According to a first aspect, this application provides an application widget display method, applied to an electronic device. The method includes:

The electronic device displays an application widget in a first preset display area, and displays a first interface in a second preset display area, where the application widget includes a first application widget and a second application widget.

Specifically, in this application, the first preset display area may correspond to a dock bar (Dock Bar) of the electronic device 100, which is also briefly referred to as a dock bar. One or more application widgets may be displayed in the first preset display area.

Further, one or more application icons may be displayed in the first preset display area.

In response to a received first input, the electronic device enters a first editing state for the application widget, displays the application widget in a third preset display area, displays the first interface in a fourth preset display area, displays a first control in a first location of the third preset display area, and displays a second control in a second location. The first location corresponds to the first application widget. The second location corresponds to the second application widget. The first control is configured to set the first application widget. The second control is configured to set the second application widget. The third preset display area corresponds to the first preset display area. The fourth preset display area corresponds to the second preset display area.

For example, the first input in this application may be touch input, a voice input, or the like of a user.

In response to a received second input, the electronic device enters a second editing state for the application widget, displays the application widget in a fifth preset display area, and displays, in a sixth preset display area, an application widget that is not added to the first preset display area. The fifth preset display area corresponds to the first preset display area. The sixth preset display area corresponds to the second preset display area.

For example, the second input in this application may be a touch input, a voice input, or the like of the user. The application widget that is not added to the first preset display area is an application widget that is not displayed in the first preset display area. In an example of this application, one or more application icons that are not added to the first preset display area and the like may be further displayed in the six preset display area.

According to the solution disclosed in this application, an application is displayed as an application widget in the dock bar, to improve efficiency of using the application of the electronic device by the user. Further, in the first editing state, the electronic device can display the application widgets in the first preset area in a centralized manner, and in the second editing state, the electronic device can display the application widgets in the fifth preset area and the sixth preset display area in a centralized manner, to facilitate centralized management by the user.

In an embodiment of this application, in response to a third input for a third application widget displayed in the sixth preset display area, the electronic device may display the third application widget in the fifth preset display area, and adjust grayscale of the third application widget in the sixth preset display area. In another embodiment of this application, in response to a third input for a third application widget displayed in the sixth preset display area, the electronic device may display the third application widget in the fifth preset display area, and delete the third application widget displayed in the sixth preset display area.

For example, the third input includes a voice input or a touch input.

In an example of this application, the user may drag the third application widget from the sixth preset display area to the fifth preset display area. The electronic device may display the third application widget in the fifth preset display area in response to the drag input, that is, add the third application widget to the fifth preset display area. In another example of this application, the user may alternatively drag the application icon in the sixth preset display area to the fifth preset display area. The electronic device may display the application icon in the fifth preset display area in response to the drag input, that is, add the application icon to the fifth preset display area.

In another example of this application, the third application widget in the sixth preset area may include a preset control. When the user taps the control, the electronic device may display the third application widget in the fifth preset display area in response to the tap input. In another example of this application, the application icon in the sixth preset display area may include a preset control. When the user taps the control, the electronic device may display the application icon in the fifth preset display area in response to the tap input, that is, add the application icon to the fifth preset display area.

Further, to more clearly identify whether an application widget has been added to the first preset display area, when displaying the third application widget in the fifth preset display area, the electronic device may adjust the grayscale of the third application widget in the sixth preset display area, or directly delete the third application widget displayed in the sixth preset display area.

In this embodiment, the electronic device can perform, in the sixth preset display area and the fifth preset display area, centralized management on a plurality of application widgets that are not added to the first preset display area, thereby improving use efficiency of the user.

In an embodiment of this application, after the displaying the third application widget in the fifth preset display area, the display method in this application further includes:

In response to a received fourth input, the electronic device exits from the second editing state, and displays, in the first preset display area, the third application widget that has been added to the fifth preset display area.

In this embodiment, when the electronic device is in the second editing state, the user can add the third application widget to the fifth preset display area. When the electronic device exits from the second editing state, the application widget that has been added may be displayed in the first preset display area, so that the user finally adds the third application widget to the first preset display area, namely, the dock bar.

In an embodiment of this application, the setting the first application widget in the foregoing embodiment includes: editing display content of the first application widget, deleting the first application widget, or adjusting a size of the first application widget; and the setting the second application widget in the foregoing embodiment includes: editing display content of the second application widget, deleting the second application widget, or adjusting a size of the second application widget.

In an embodiment of this application, the first control is an editing control. The method shown in this application further includes:

The electronic device receives a fifth input for the editing control of the first application widget, and displays an editing page of the first application widget in response to the fifth input. The editing page is used to edit the display content of the first application widget. According to the method shown in this embodiment of this application, the user can edit content of the first application widget as required. This further improves convenience for the user to use the application.

In an embodiment of this application, the first control is a size control. The method shown in this application further includes:

The electronic device receives a sixth input for the size control of the first application widget.

The electronic device adjusts the size of the first application widget in response to the sixth input. According to the method shown in this embodiment of this application, the user can edit and adjust the size of the first application widget as required. This further improves convenience for the user to use the application.

In this application, the method shown in this application further includes: The electronic device displays application widgets in the fifth preset display area and/or application widgets in the sixth preset display area in a stack manner in response to a received seventh input.

After the application widgets are stacked, a display area of an entire application widget may be reduced, so that the user can operate the application widget in the fifth preset display area or the sixth preset display area more conveniently.

In this application, that the electronic device displays application widgets in the fifth preset display area and/or application widgets in the sixth preset display area in a stack manner in response to a received seventh input includes:

The electronic device obtains one or more touch report points of the seventh input, calculates a distance between the touch report point and a preset location on a display, and displays the application widgets in the fifth preset display area and/or the application widgets in the sixth preset display area in the stack manner based on the distance.

For example, after obtaining one touch report point in the seventh input, the electronic device may calculate a longest distance between the touch report point and a center line of the display, and determine, based on the longest distance, a location for stacking application widgets.

In an embodiment of this application, that the electronic device displays application widgets in the fifth preset display area and/or application widgets in the sixth preset display area in a stack manner in response to a received seventh input includes:

The electronic device obtains one or more touch report points of the seventh input. If the touch report point is located in a first area of a display, the electronic device displays, in the first area, the application widgets in the fifth preset display area and/or the application widgets in the sixth preset display area in the stack manner. In this embodiment, the electronic device directly determines a stacking area of the application widgets based on the touch area of the user. This further improves convenience for the user to operate the entire application widget.

In another embodiment of this application, the first interface may be a desktop wallpaper, or may be specifically an application interface, so that the entire display interface can be neater.

According to a second aspect, this application provides an electronic device, including a processor and a storage device. The storage device stores program instructions. When the program instructions are run by the processor, the electronic device is enabled to perform the following steps.

The electronic device displays an application widget in a first preset display area, and displays a first interface in a second preset display area. The application widget includes a first application widget and a second application widget.

In response to a received first input, the electronic device enters a first editing state for the application widget, displays the application widget in a third preset display area, displays the first interface in a fourth preset display area, displays a first control in a first location of the third preset display area, and displays a second control in a second location. The first location corresponds to the first application widget. The second location corresponds to the second application widget. The first control is configured to set the first application widget. The second control is configured to set the second application widget. The third preset display area corresponds to the first preset display area. The fourth preset display area corresponds to the second preset display area.

In response to a received second input, the electronic device enters a second editing state for the application widget, displays the application widget in a fifth preset display area, and displays, in a sixth preset display area, an application widget that is not added to the first preset display area. The fifth preset display area corresponds to the first preset display area. The sixth preset display area corresponds to the second preset display area.

In another embodiment of this application, when the program instructions are run by the processor, in response to a third input for a third application widget displayed in the sixth preset display area, the electronic device further displays the third application widget in the fifth preset display area, and adjusts grayscale of the third application widget in the sixth preset display area; or in response to a third input for a third application widget displayed in the sixth preset display area, the electronic device displays the third application widget in the fifth preset display area, and deletes the third application widget displayed in the sixth preset display area.

In another embodiment of this application, when the program instructions are run by the processor, in response to a received fourth input, the electronic device exits from the second editing state, and displays, in the first preset display area, the third application widget that has been added to the fifth preset display area.

In another embodiment of this application, when the program instructions are run by the processor, the electronic device receives a fifth input for an editing control of the first application widget, and displays an editing page of the first application widget in response to the fifth input. The editing page is used to edit display content of the first application widget.

In another embodiment of this application, when the program instructions are run by the processor, the electronic device receives a sixth input for a size control of the first application widget, and adjust a size of the first application widget in response to the sixth input.

In another embodiment of this application, when the program instructions are run by the processor, the electronic device displays application widgets in the fifth preset display area and/or application widgets in the sixth preset display area in a stack manner in response to a received seventh input.

In another embodiment of this application, a step in which when the program instructions are run by the processor, the electronic device displays application widgets in the fifth preset display area and/or application widgets in the sixth preset display area in a stack manner in response to a received seventh input includes the following steps.

The electronic device obtains one or more touch report points of the seventh input, calculates a distance between the touch report point and a preset location on a display, and displays the application widgets in the fifth preset display area and/or the application widgets in the sixth preset display area in the stack manner based on the distance.

In another embodiment of this application, a step in which when the program instructions are run by the processor, the electronic device displays application widgets in the fifth preset display area and/or application widgets in the sixth preset display area in a stack manner in response to a received seventh input includes the following steps.

The electronic device obtains one or more touch report points of the seventh input. If the touch report point is located in a first area of a display, the electronic device displays, in the first area, the application widgets in the fifth preset display area and/or the application widgets in the sixth preset display area in the stack manner.

According to a third aspect, this application provides a storage medium, including computer instructions. When the computer instructions are run on an electronic device, the electronic device is enabled to perform the display method shown in the first aspect.

### BRIEF DESCRIPTION OF DRAWINGS

FIG. 1A to FIG. 1E are schematic diagrams in which a user manages an icon in a dock bar of an electronic device 100 in the conventional technology;
FIG. 2A to FIG. 2E are graphical interfaces of an electronic device 100 according to an embodiment of this application;
FIG. 3A and FIG. 3B are graphical interfaces of an electronic device 100 that are managed by a user according to another embodiment of this application;
FIG. 4A and FIG. 4B are graphical interfaces of an electronic device 100 that are managed by a user according to another embodiment of this application;
FIG. 5A and FIG. 5B are graphical interfaces of an electronic device 100 that are managed by a user according to another embodiment of this application;
FIG. 6A and FIG. 6B are graphical interfaces of an electronic device 100 that are managed by a user according to another embodiment of this application;
FIG. 7A to FIG. 7D are graphical interfaces of an electronic device 100 that are managed by a user according to an embodiment of this application;
FIG. 8A to FIG. 8D are graphical interfaces of an electronic device 100 that are managed by a user according to another embodiment of this application;
FIG. 9A and FIG. 9B are graphical interfaces of an electronic device 100 that are managed by a user according to another embodiment of this application;
FIG. 10A to FIG. 10C are graphical interfaces of an electronic device 100 that are managed by a user according to an embodiment of this application;
FIG. 11A to FIG. 11C are graphical interfaces of an electronic device 100 that are managed by a user according to another embodiment of this application;
FIG. 12A and FIG. 12B are graphical interfaces of an electronic device 100 that are managed by a user according to another embodiment of this application;
FIG. 13A to FIG. 13C are graphical interfaces of an electronic device 100 that are managed by a user according to another embodiment of this application;
FIG. 14 is a graphical interface, managed by a user, of an electronic device 100 according to another embodiment of this application;
FIG. 15A to FIG. 15C are graphical interfaces of an electronic device 100 that are managed by a user according to another embodiment of this application;
FIG. 16A to FIG. 16F are graphical interfaces of an electronic device 100 according to an embodiment of this application;
FIG. 17A and FIG. 17B are graphical interfaces of an electronic device 100 that are managed by a user according to another embodiment of this application;
FIG. 18A to FIG. 18C are graphical interfaces of an electronic device 100 that are managed by a user according to another embodiment of this application;
FIG. 19A to FIG. 19C are graphical interfaces of an electronic device 100 that are managed by a user according to another embodiment of this application;
FIG. 20A to FIG. 20C are graphical interfaces of an electronic device 100 that are managed by a user according to an embodiment of this application;
FIG. 21 is a schematic diagram of a structure of an electronic device 100 according to an embodiment of this application; and
FIG. 22 is a schematic diagram of a software structure of an electronic device 100 according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments of this application, unless otherwise specified, "a plurality of" means two or more than two.

In the conventional technology, for convenience of a user, a dock bar is generally set on a desktop of an electronic device, for example, a head unit, a mobile phone, or a tablet computer. The dock bar is a shortcut window for displaying and switching tasks. On the display interface of a display, the dock bar may be represented as a preset display area, and the user may add one or more application icons to the preset display area. In this way, the user may directly tap the application icon in the dock bar to open a corresponding application, without searching for the application separately in a desktop application menu. This improves convenience for the user to use the electronic device.

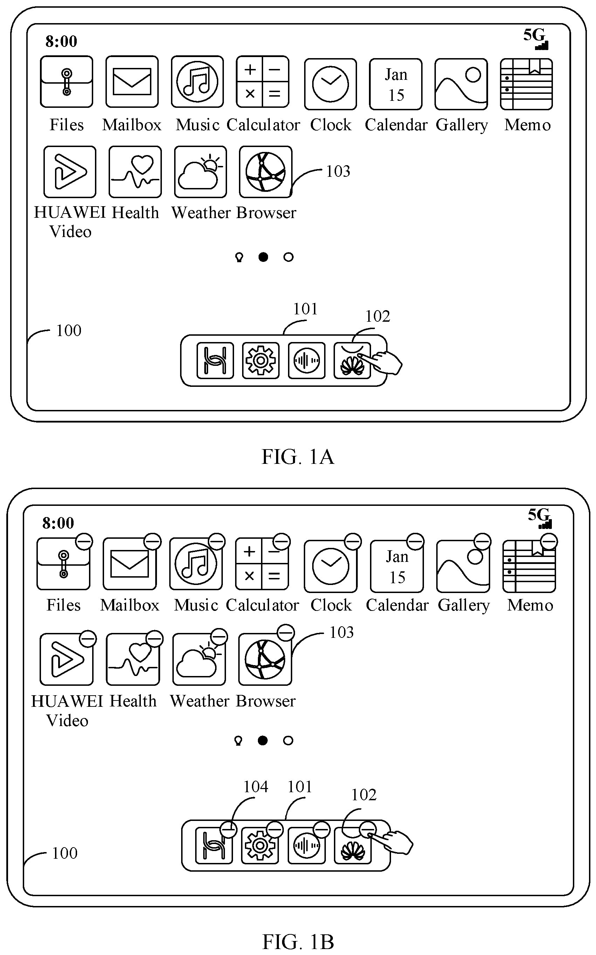

Refer to FIG. 1A to FIG. 1E. The following explains and describes related operations of application icons in a dock bar in the conventional technology. FIG. 1A to FIG. 1E are specifically graphical interfaces for managing application icons in a dock bar of an electronic device 100 in the conventional technology. The electronic device 100 may include, for example, a head unit, a mobile phone, and a tablet computer.

Refer to FIG. 1A. A first preset display area 101 and another display area (a display area other than the first preset display area 101) are included on a desktop of the electronic device 100. The first preset display area 101 is an area corresponding to the dock bar of the electronic device 100. A plurality of application icons may be displayed in the dock bar. For example, an icon of an application 102 may be displayed in the dock bar, and a user may directly tap the icon to start the application 102.

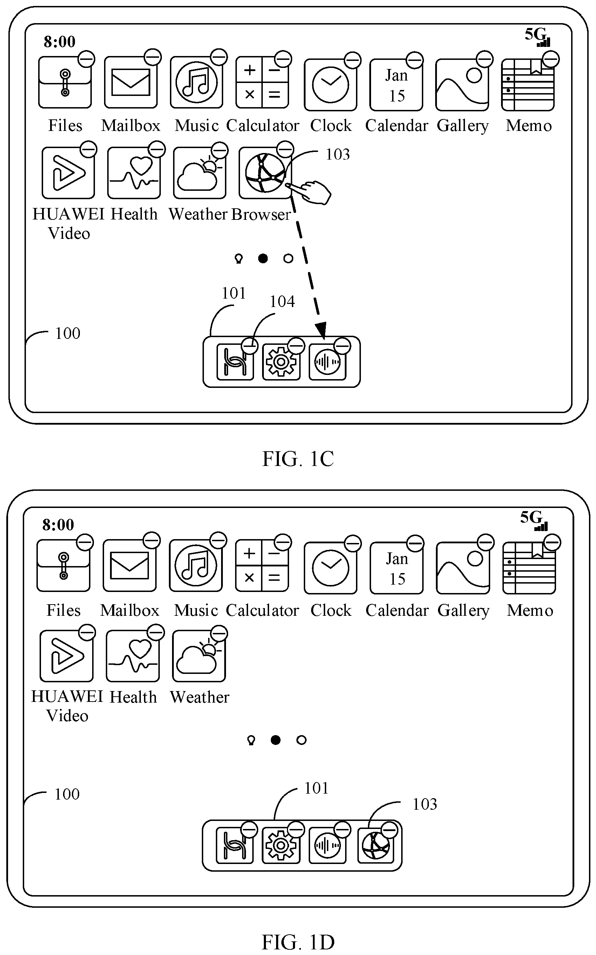

The user may also add an application icon to or delete an application icon from the dock bar. For example, on the graphical interface shown in FIG. 1A, the user may touch and hold the icon of the application 102, so that the entire desktop of the electronic device 100 enters an editing state shown in FIG. 1B. In the editing state, delete buttons 104 may be displayed on application icons on the desktop of the electronic device 100, and the delete button 104 is configured to delete an application icon. Refer to FIG. 1B and FIG. 1C. The electronic device 100 may delete the icon of the first application 102 from the dock bar in response to a tap operation performed by the user on a delete button on the application 102.

Further, refer to FIG. 1C and FIG. 1D. In the editing state, the user may select an icon of an application 103, and drag the icon of the second application 103 to the dock bar. The electronic device may add the second application 103 to the dock bar in response to the drag operation of the user, so that the icon of the second application 103 is displayed in the dock bar.

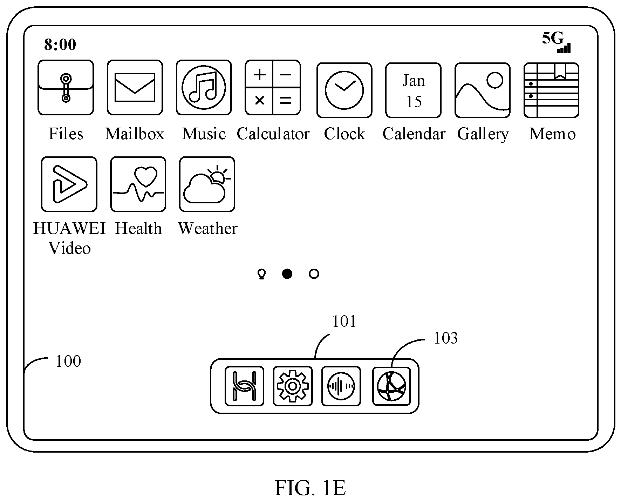

Further, the user may control the electronic device 100 to exit from the editing state, so that the electronic device 100 enters the graphical interface in FIG. 1E.

It can be learned from the foregoing descriptions that, in the conventional technology, only an application icon can be displayed in the dock bar, and the user can use an application only after starting the corresponding application by tapping the application icon. Therefore, an operation process is complicated. In addition, when the application icon is added to or deleted from the dock bar, application icons cannot be added or deleted in a centralized manner. Therefore, a management process is not intelligent enough.

In view of this, this application provides an application widget display method, to resolve the foregoing technical problem.

In this application, an application widget may include all or some content of a display interface displayed after an application is started, and the application widget may also include a control. The control may be any control on the display interface displayed after the application is started, and the control is configured to implement a specific function of the application.

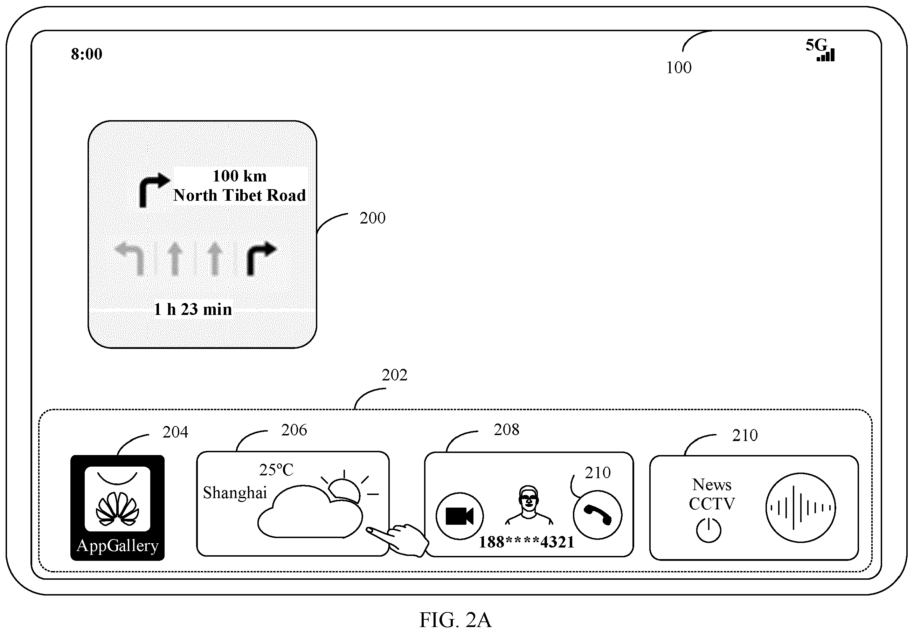

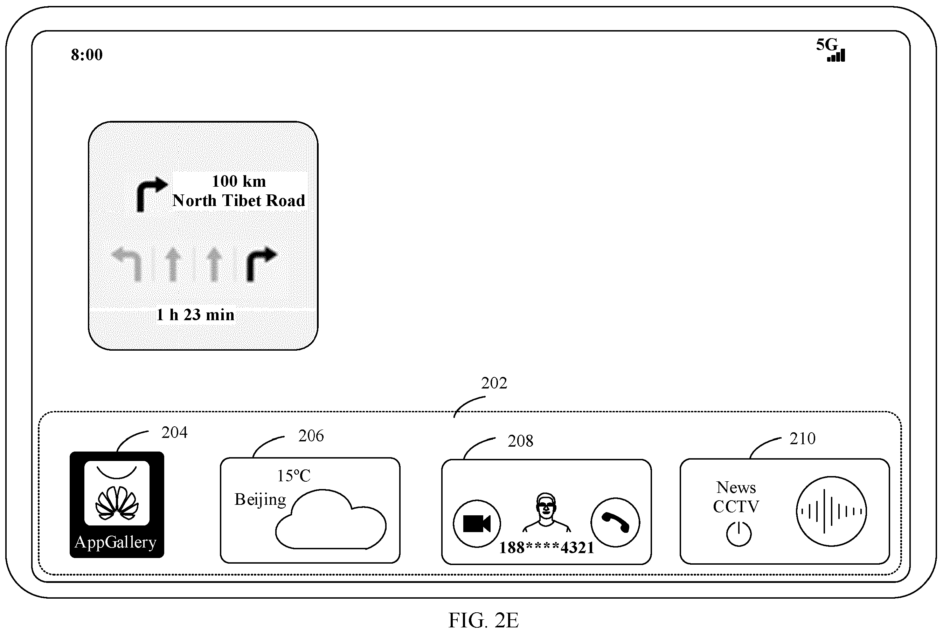

Refer to FIG. 2A to FIG. 2E. The following explains and describes an application widget management method in this application. FIG. 2A to FIG. 2E are specifically example diagrams of graphical interfaces of an electronic device 100 according to an embodiment of this application.

Refer to FIG. 2A. A first preset display area 202 and another display area (a display area other than the first preset display area 202) are included on a display interface of a display of the electronic device 100. The first preset display area 202 is an area corresponding to a dock bar of the electronic device 100.

In an example of this application, one or more windows (for example, a window of an application 200) of a running application on the electronic device may be included in the another display area. An application icon may be included or may not be included in the another display area. Optionally, a desktop wallpaper or an application interface may be displayed in the another display area.

The dock bar of the electronic device 100 may include one or more application icons and/or one or more application widgets. For example, the dock bar of the electronic device 100 in FIG. 2A includes an application icon 204, a first application widget 206, a second application widget 208, and a third application widget 210.

In an example of this application, the application widget may include all or some content of a display interface displayed after an application is started. For example, the first application widget 206 in FIG. 2A is a weather application widget, and content of the application widget is content of an interface displayed after a weather application is started. For example, the display interface displayed after the weather application is started is an interface of weather and a temperature of Shanghai. The content of the weather application widget can be displayed as the weather and the temperature of Shanghai. In this way, a user can know the weather and the temperature of Shanghai without starting the weather application.

In an example of this application, the application widget may include any control on a display interface displayed after an application is started. For example, the second application widget 208 in FIG. 2A is an application widget of a phone application, and includes a control 210. When the user taps the control 210, the phone application may directly make a call to a corresponding user in the second application widget 208 in response to the tap operation of the user. In other words, the user may directly make a call to a specified user by using the control in the application widget.

It should be noted that the application widget is not limited to including content of a display interface of the application or a control configured to operate the application, and may further include other content that can implement a specific function of the application. This is not limited in this application.

It can be learned from the foregoing descriptions that, compared with the conventional technology, in this application, not only the application icon but also the application widget can be displayed in the dock bar, so that the user can directly operate the application by using the application widget. This simplifies user operations and improves user experience.

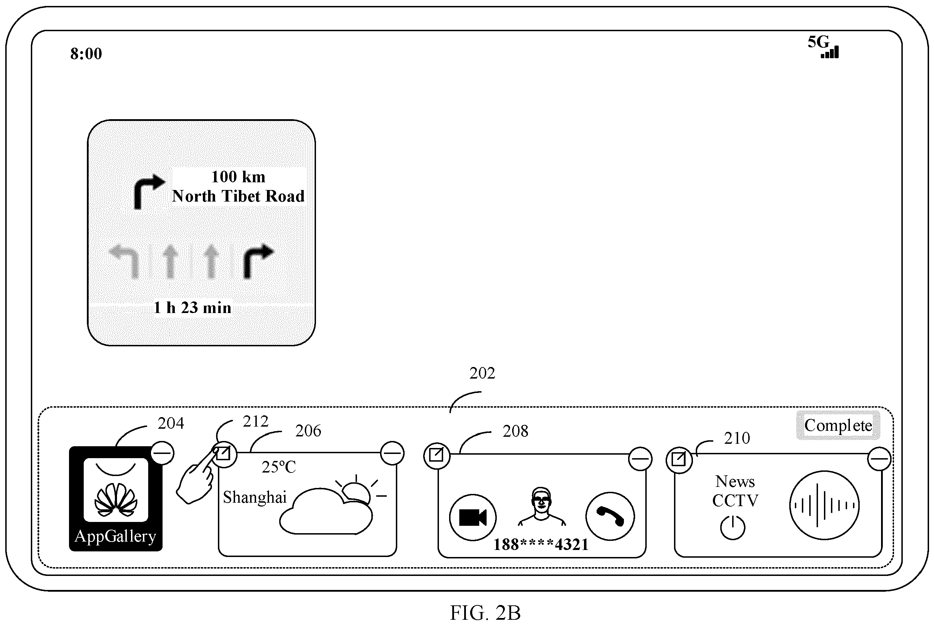

In an embodiment of this application, the user may edit some or all content in the application widget in the dock bar. Refer to FIG. 2A. The user may operate the dock bar, so that the display interface of the electronic device 100 enters a first editing state shown in FIG. 2B, to edit the application widget or the application icon in the dock bar. For example, in the first editing state, the desktop wallpaper or the application interface may be still displayed in the another display area except the dock bar.

In a specific example of this application, the user may touch and hold an application widget, an application icon, or the first preset display area 202 in the dock bar, so that the display interface of the electronic device 100 enters the first editing state. Alternatively, the user may input a specified voice to the electronic device 100, so that the electronic device 100 responds to the voice input and controls the display interface of the electronic device 100 to enter the first editing state. It should be noted that, in this application, a manner of controlling the display interface of the electronic device 100 to enter the first editing state is not limited to the foregoing manner, and another operation may be performed to enable the display interface of the electronic device 100 to enter the first editing state. This is not limited in this application.

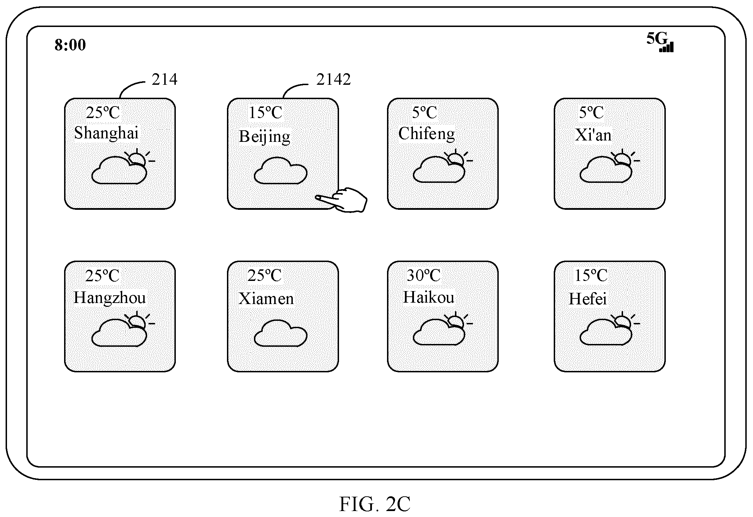

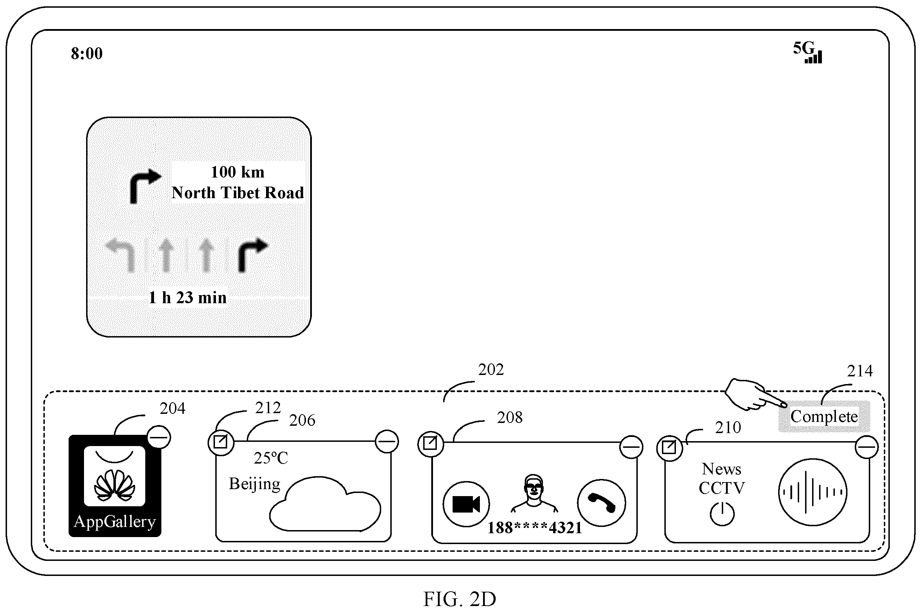

In the first editing state, editing controls 212 may be displayed on the application widgets in the dock bar, and the editing control 212 is configured to edit widget content. Refer to FIG. 2B. The user may tap an editing control 212 of the first application widget 206, and the electronic device 100 may jump to an editing page of the first application widget shown in FIG. 2C in response to the tap operation of the user. The editing page includes a plurality of preset application widgets 214. Refer to FIG. 2C. The user may tap an application widget 2142 in FIG. 2C, so that the electronic device 100 changes interface content of the first application widget in response to the tap operation. Refer to FIG. 2B and FIG. 2D. Content of the first application widget 206 is changed to content corresponding to the widget 2142. Specifically, the content of the first application widget is changed from the weather and the temperature of Shanghai to weather and a temperature of Beijing.

Further, after a widget is completely edited, the user may control the display interface of the electronic device 100 to exit from the first editing state. For example, the user may tap a complete control 214 to exit from the first editing state. It should be noted that, in this application, a manner of controlling the dock bar to exit from the first editing state is not limited to the foregoing manner, and another operation may be performed to enable the display interface of the electronic device 100 to exit from the first editing state. This is not limited in this application.

In another embodiment of this application, the user may not only edit the application widget, but also delete the application widget.

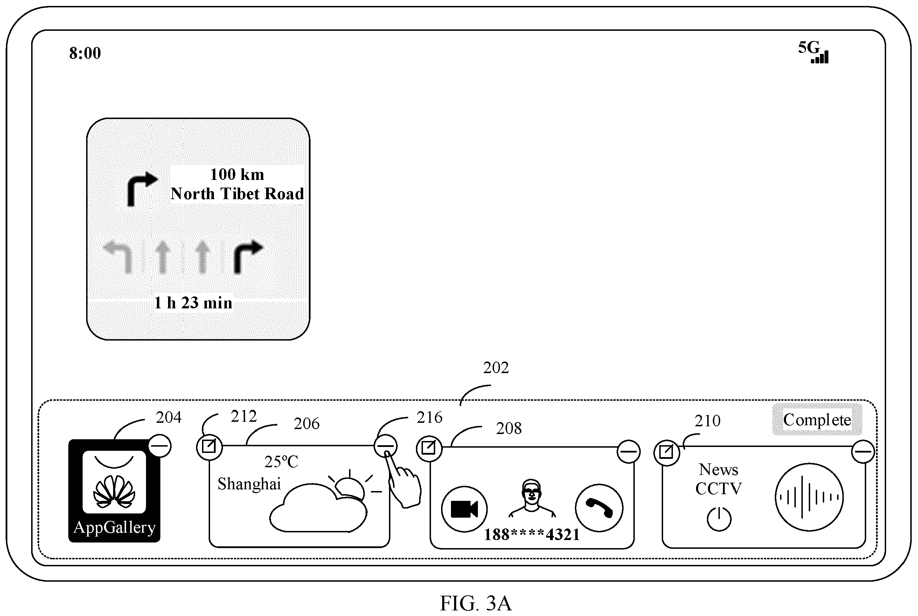

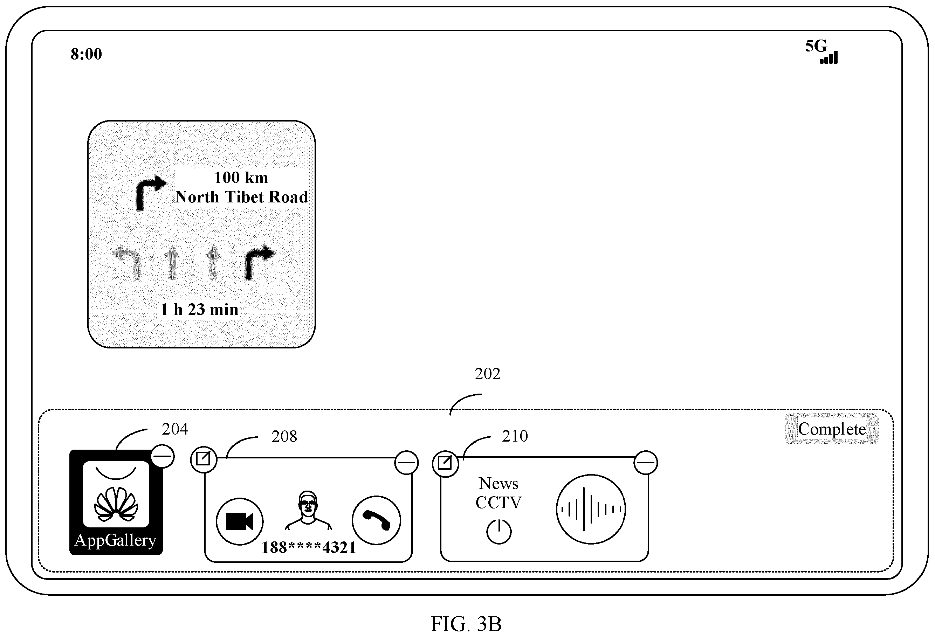

Refer to FIG. 3A and FIG. 3B. After the display interface of the electronic device 100 enters the first editing state, delete controls 216 may be displayed on the application widgets, and the delete control 216 is configured to delete the application widget. For example, refer to FIG. 3A and FIG. 3B. The user may tap the delete control 216 on the first application widget 206, and the electronic device 100 may delete the first application widget 206 from the dock bar in response to the tap operation of the user. In another example of this application, the user may further drag the application widget in the dock bar out of the first preset area 202, and the electronic device 100 may delete the application widget in response to the drag operation. Certainly, the user may alternatively delete the application widget in the dock bar in another manner. This is not limited in this application.

In another embodiment of this application, the user may not only edit or delete the application widget, but also adjust rankings of the application widgets as required.

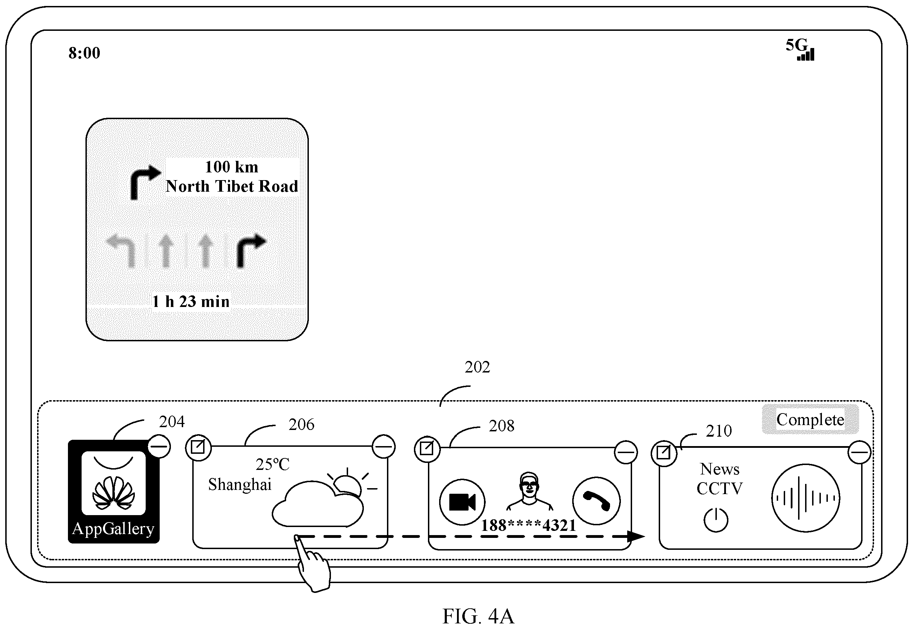

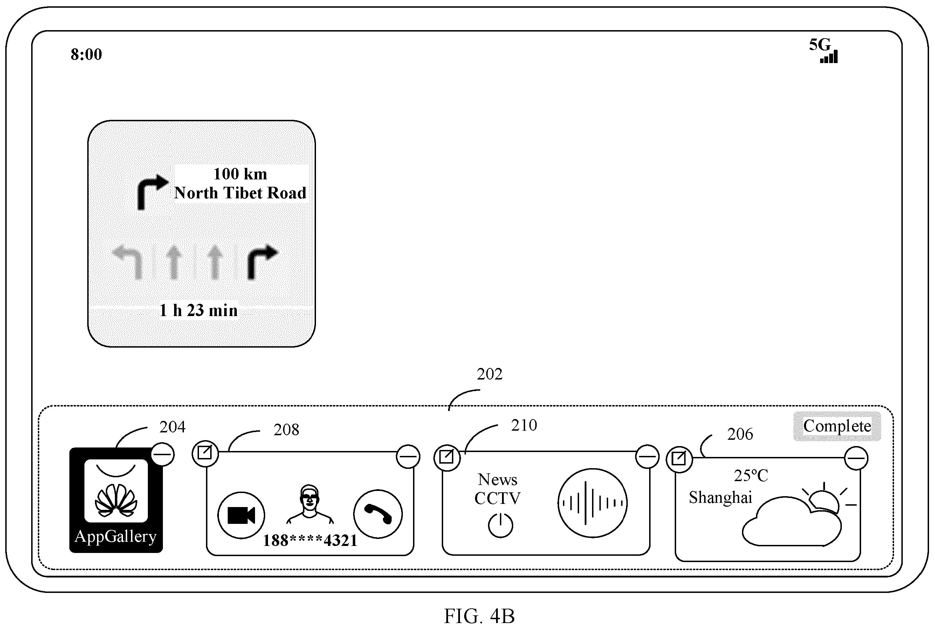

Refer to FIG. 4A and FIG. 4B. After the display interface of the electronic device 100 enters the first editing state, the user may drag the first application widget 206 to a location between the second application widget 208 and the third application widget 210, and the electronic device 100 may adjust the first application widget 206 to the location between the second application widget 208 and the third application widget 210 in response to the drag operation of the user.

In another embodiment of this application, the user may not only edit the content of the application widget, delete the application widget, or adjust a location of the application widget, but also adjust a size of the widget as required. In an example, after the dock bar enters the first editing state, a control for size adjustment may be displayed on the one or more widgets, and the user may adjust the widget size by using the control for size adjustment.

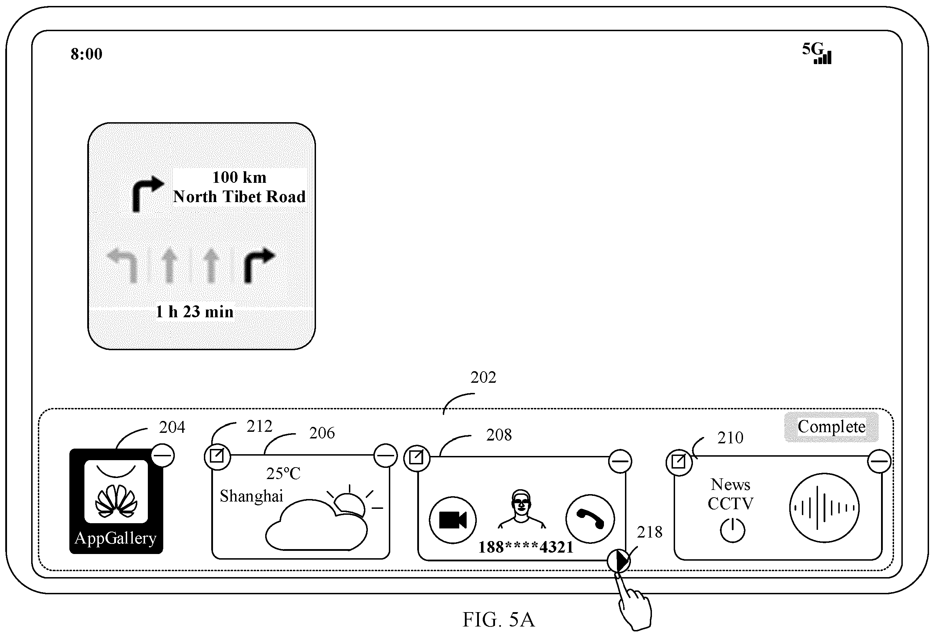

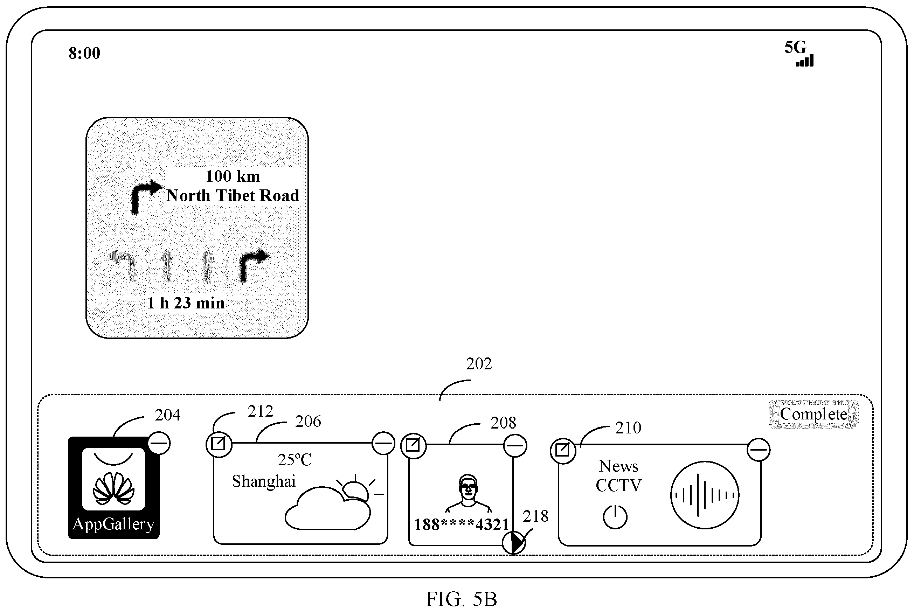

Refer to FIG. 5A and FIG. 5B. After the display interface of the electronic device 100 enters the first editing state, a size adjustment control 218 may be displayed on the second application widget 208. The user may tap the size adjustment control 218, and the electronic device 100 may reduce a size of the second application widget 208 by a preset size in a length direction in response to the tap operation of the user. FIG. 5B shows an interface of the second application widget 208 whose size is reduced by the preset size. Further, on a page shown in FIG. 5B, the user may tap the size adjustment control 218 again, to restore the second application widget 208 to an original size.

It should be noted that, in this application, a manner of adjusting the size of the application widget is not limited to setting the size adjustment control, and this objective may also be achieved in another manner. For example, the electronic device 100 may adjust the size based on an operation of dragging an edge of the application widget by the user.

In another embodiment of this application, the user may not only edit the application widget, delete the application widget, adjust the location of the application widget, or adjust the size of the application widget, but also directly switch interface content of the application widget.

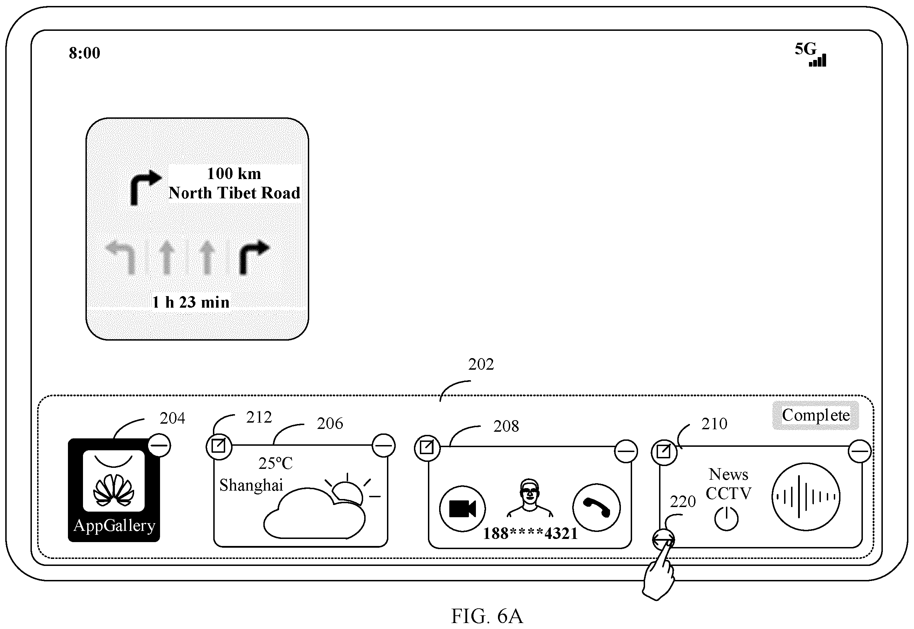

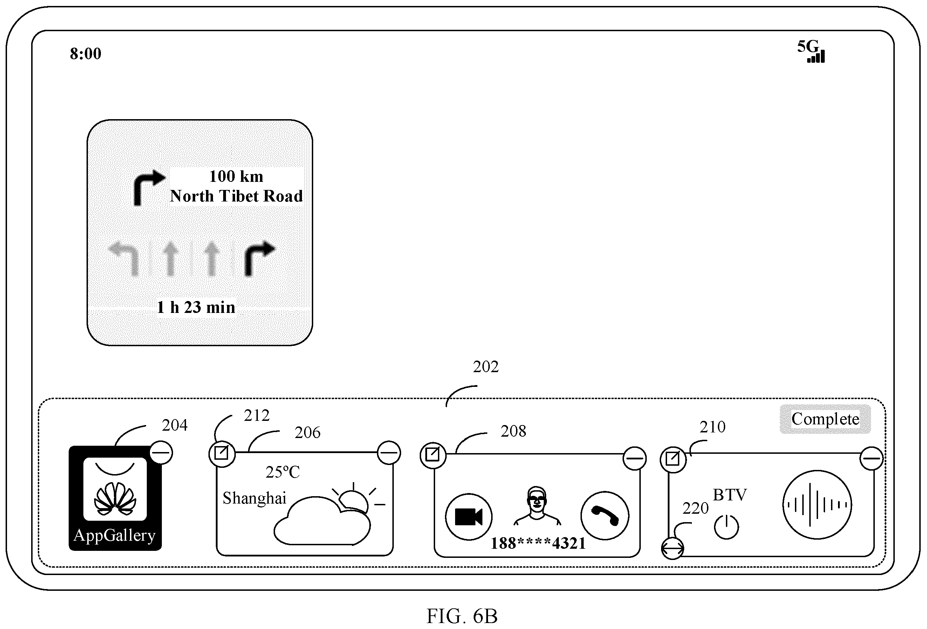

In the embodiment shown in FIG. 2A to FIG. 2E, an example in which the editing page is entered to complete widget content switching is used for description. In another embodiment of this application, the content of the application widget may alternatively be directly switched when the editing page is not entered. In an example, after the display interface of the electronic device 100 enters the first editing state, a control for interface switching may be displayed on the one or more application widgets in the dock bar, and the user may switch the interface content of the application widget by using the control for interface switching. For example, refer to FIG. 6A and FIG. 6B. After the display interface of the electronic device 100 enters the first editing state, a switch control 220 may be displayed on the third application widget 210. The user may tap the switch control 220, and the electronic device 100 may switch interface content of a broadcast application widget 210 from a page shown in FIG. 6A to a page shown in FIG. 6B in response to the tap operation of the user. In this way, the user can complete content switching of the application widget without a need to enter a separate widget application editing page.

In the embodiments shown above, it can be learned that, in the first editing state, the user can directly perform an operation such as deleting, sorting, editing, or interface switching on the application widgets in the dock bar. In other words, when the user wants to quickly edit the application widget in the dock bar, the first editing state may be used.

Widgets may be further managed in a centralized manner according to the application widget display method disclosed in this application, to further improve widget editing efficiency.

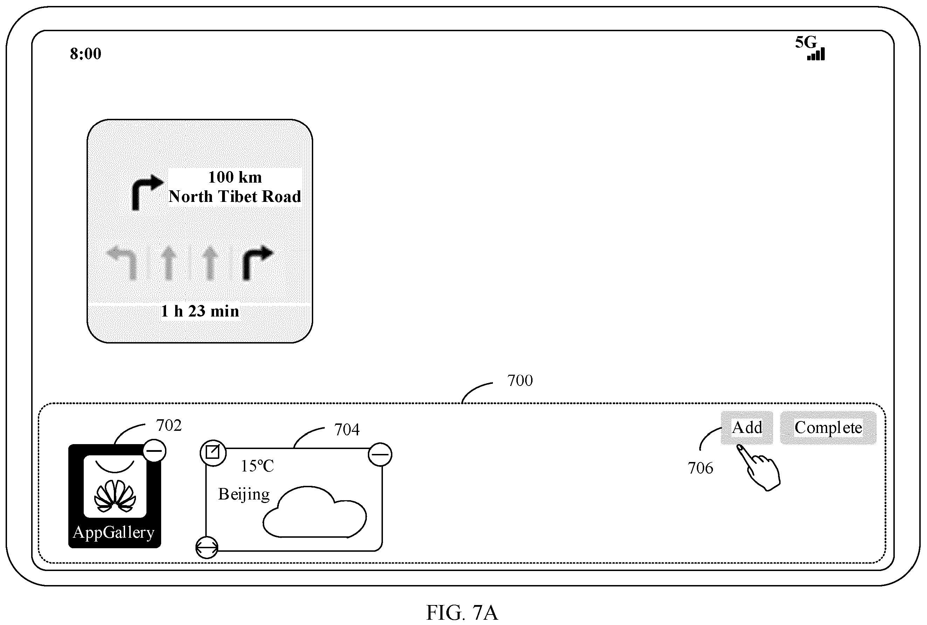

The following further explains and describes a widget editing method of this application with reference to FIG. 7A to FIG. 7D. FIG. 7A to FIG. 7D are specifically graphical interfaces of a desktop of the electronic device 100 according to another embodiment of this application.

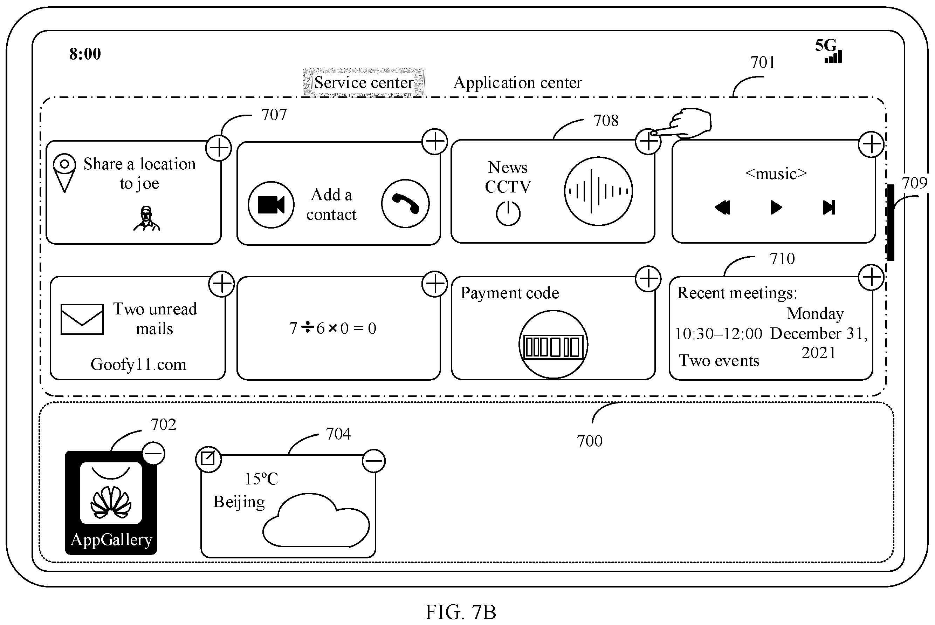

Refer to FIG. 7A and FIG. 7B. In the first editing state, a first application widget 704 and an application icon 702 are displayed in a first preset display area 700 (namely, a dock bar). The first preset display area 700 includes a first addition control 706. The electronic device 100 may enter the second editing state in response to an operation of tapping the first addition control 706 by the user. In the second editing state, the electronic device 100 displays, in a second preset display area 701, one or more application widgets that are not added to the dock bar. Further, the electronic device 100 includes an application center and a service center. FIG. 7B is a display interface corresponding to the service center, that is, the service center is used to display an application widget. The application center is used to display an application icon. For details, refer to the following descriptions. Further, on a graphical interface shown in FIG. 7B, the user may slide a drop-down control 709 to display another application widget in the second preset display area 701.

It should be noted that, in the foregoing embodiment, an example in which the second editing state is entered based on the first editing state is used for description. It may be understood that the second editing state may alternatively be entered in another manner. This is not limited in this application.

Still refer to FIG. 7B. The application icon 702 and the first application widget 704 are included in the first preset display area 700, and a second application widget 708 and a third application widget 710 are included in the second preset display area 701. The second application widget 708 and the third application widget 710 are the application widgets that are not added to the dock bar.

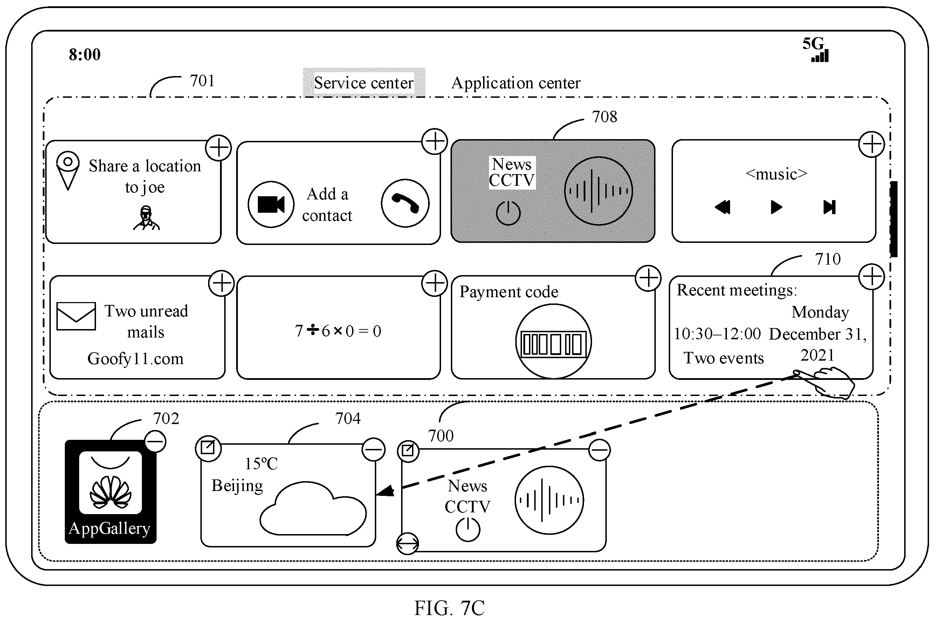

In an example of this application, refer to FIG. 7B and FIG. 7C. The second application widget 708 in the second preset display area 701 further includes an add control 707. The electronic device 100 may add the second application widget 708 to the dock bar in response to an operation of tapping the add control 707 by the user, that is, the second application widget 708 is displayed in a first preset area. Further, as shown in FIG. 7C, in the first preset display area 700, after the second application widget 708 is successfully added, the second application widget 708 is displayed after the first application widget 704 based on an addition ranking of the second application widget 708.

Optionally, in this example, after the second application widget 708 is added to the dock bar, the electronic device 100 may further delete a corresponding second application widget from the second preset display area 702, to indicate that the second application widget can no longer be added. In another example, after the second application widget 708 is added to the dock bar, grayscale of the second application widget 708 may be changed, to indicate that the second application widget can no longer be added.

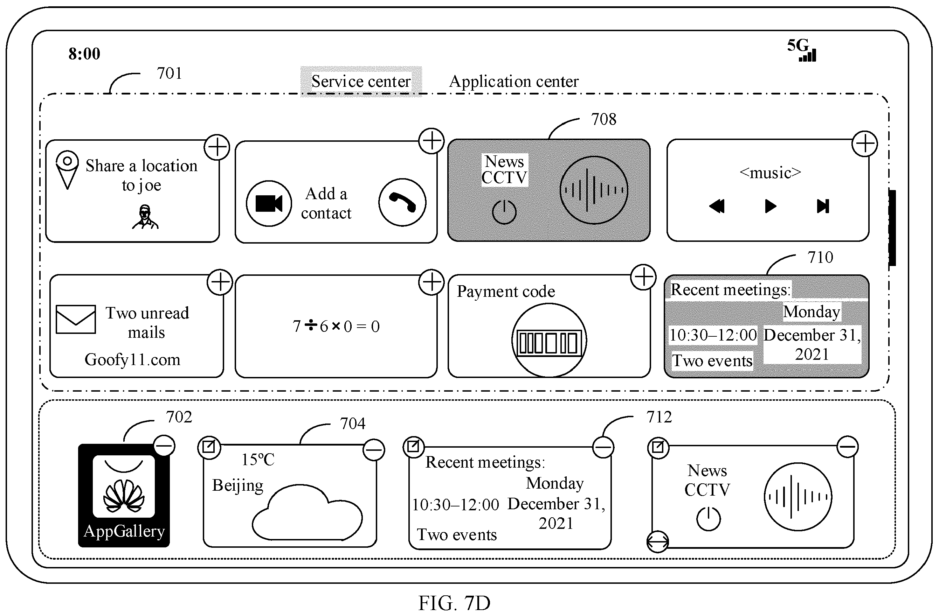

Refer to FIG. 7C and FIG. 7D. The electronic device 100 may add the third application widget 710 to the dock bar in response to an operation of dragging the third application widget 710 from the second preset display area 701 to the first preset display area 700. Specifically, an end location to which the third application widget is dragged may be between the first application widget 704 and the second application widget. In this way, when the third application widget 710 is added to the dock bar, the third application widget is arranged between the first application widget 704 and the second application widget, that is, the third application widget 710 is displayed between the first application widget 704 and the second application widget. Further, after the third application widget 710 is added to the dock bar, grayscale of the third application widget 710 in the second preset display area may be adjusted, or the third application widget 710 is not displayed in the second preset display area.

Further, on the interface shown in FIG. 7D, the user may tap a delete control 712 on the third application widget in the dock bar, and in response to the deletion operation of the user, the electronic device 100 may delete the third application widget in the dock bar, and restore the grayed third application widget in the second preset display area 701 to a style shown in FIG. 7C, or re-display the deleted third application widget in the second preset display area.

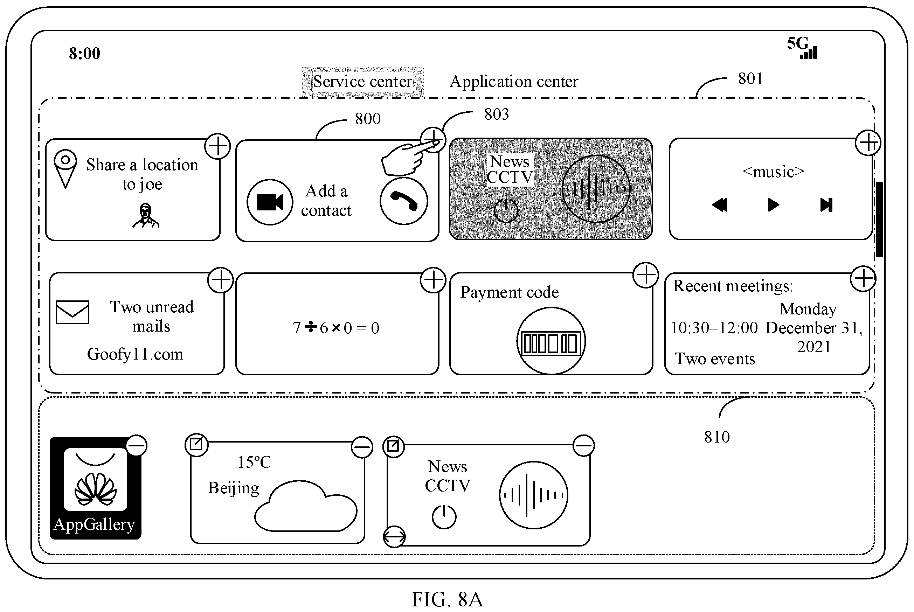

The user can perform centralized management on a plurality of application widgets by using the pages shown in FIG. 7A to FIG. 7D. This simplifies an operation process of the user. The user needs to set widget content when adding some widgets. For example, the user needs to specify a contact when adding a phone application widget to the dock bar for the first time. Therefore, when detecting that a preset application widget is added to the dock bar, the electronic device 100 may directly jump to an editing page of the application widget, so that the user may set content of the application widget for subsequent use. Refer to FIG. 8A to FIG. 8D. The following further explains and describes the widget management method in this application. FIG. 8A to FIG. 8D are specifically example diagrams of graphical interfaces of the electronic device 100 according to another embodiment of this application.

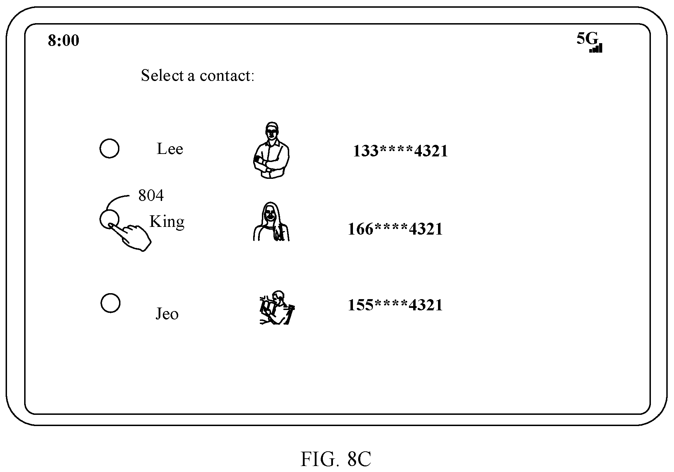

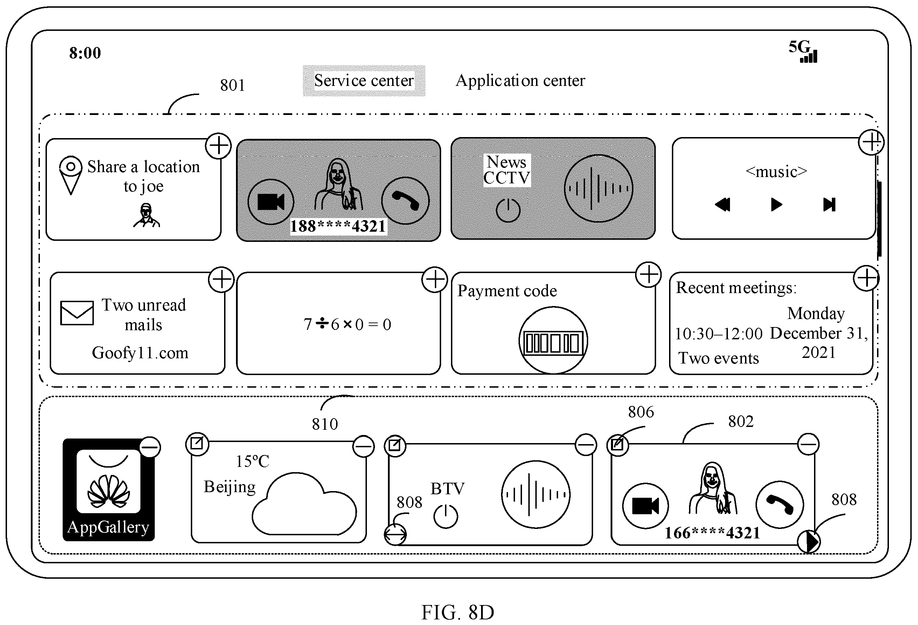

Refer to FIG. 8A. A first application widget 800 is displayed in a second preset display area 801, and the first application widget 800 has not been added to a dock area. For example, the first application widget may be specifically a phone application widget. When the user taps an add control 803 on the phone application widget 800, or when the user drags the phone application widget 800 toward a first preset display area 810, the electronic device 100 may enter a page shown in FIG. 8C in response to the tap operation or the drag operation. The page shown in FIG. 8C may be specifically an example diagram of an editing page of the phone application widget. The user may set content of the phone application widget on the editing page. For example, the user may tap a select control 804 to set the content of the phone application widget in the dock bar, and enter the graphical interface shown in FIG. 8D. As shown in FIG. 8D, content of a phone application widget 802 in the dock bar is changed according to user settings. In this way, the user can directly operate the application widget.

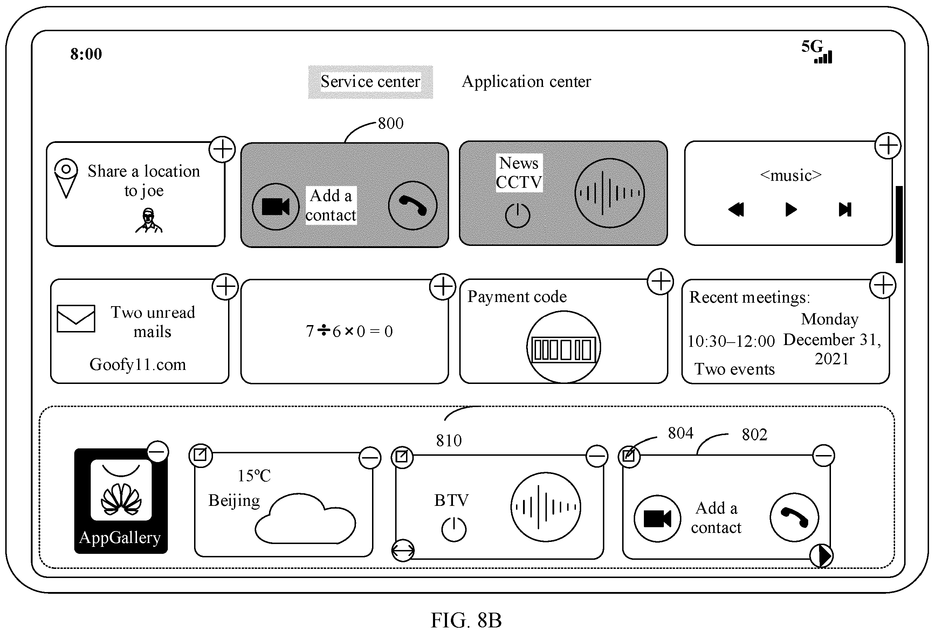

Optionally, before entering the page shown in FIG. 8C from a page shown in FIG. 8A, the electronic device may first enter a page shown in FIG. 8B, that is, after the phone application widget 802 is displayed in the first preset display area 810, the electronic device automatically enters the editing page shown in FIG. 8C. In this way, the user may be reminded that the widget has been successfully added.

Optionally, on the interface shown in FIG. 8B, the user may first add a first application widget 802 to the dock bar, and then edit content of the first application widget 802 by using an editing control 804 on the first application widget 802. For example, when the user taps an editing control 806 on the first application widget 802, the electronic device 100 enters the page shown in FIG. 8C in response to the tap operation of the user, so that the user sets content of the first application widget.

It should be noted that, compared with those in a first editing state, the user may also adjust a ranking of a widget in the dock bar and adjust a widget size in a second editing state. For details, refer to FIG. 4A, FIG. 4B, FIG. 5A, FIG. 5B, FIG. 6A, and FIG. 6B. Details are not described herein again.

In real life, displays of some electronic devices 100 are large, and when an application widget fills the entire display, widget management is inconvenient. For example, a user of a head unit generally sits in a driver seat, and a widget that is on a side of a display of the head unit and is away from the driver seat is far away from the user, and the user may need to adjust a body posture to manage a related widget, which is not user-friendly.

The application widgets in this application are displayed in a stack manner, to resolve the foregoing problem. The following further explains and describes the method of this application.

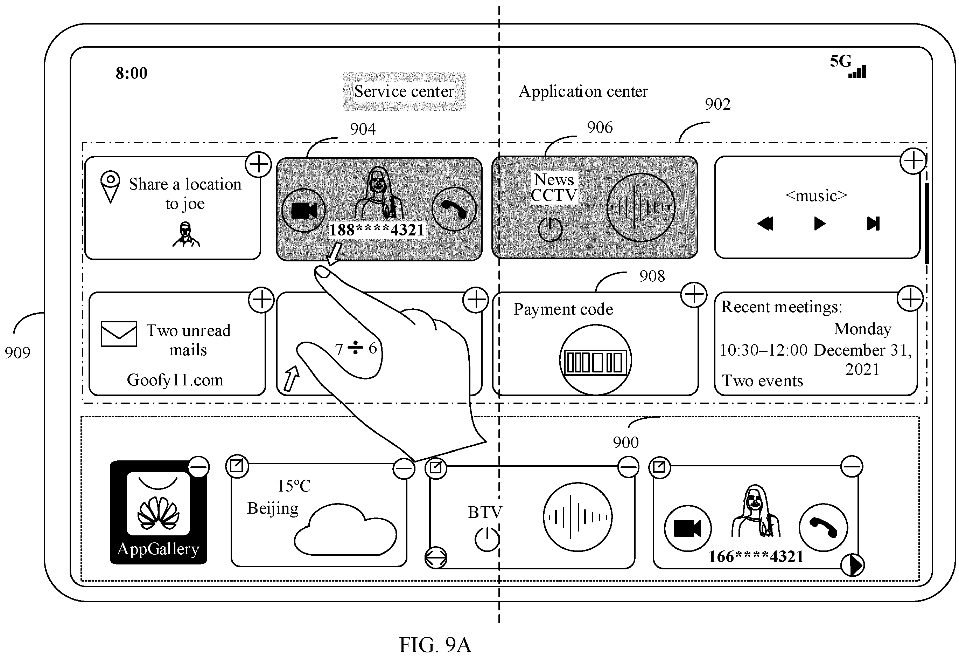

Refer to FIG. 9A. An application icon and a plurality of added application widgets are displayed in the first preset area of the electronic device 100, and a plurality of non-added application widgets such as an application widget 908 may be displayed in the second preset display area.

The user can control stacking of application widgets in a plurality of manners. In an example of this application, a preset control may be set on the desktop of the electronic device 100. When the user taps the preset control, application widgets in the first preset area and/or the second preset display area are stacked.

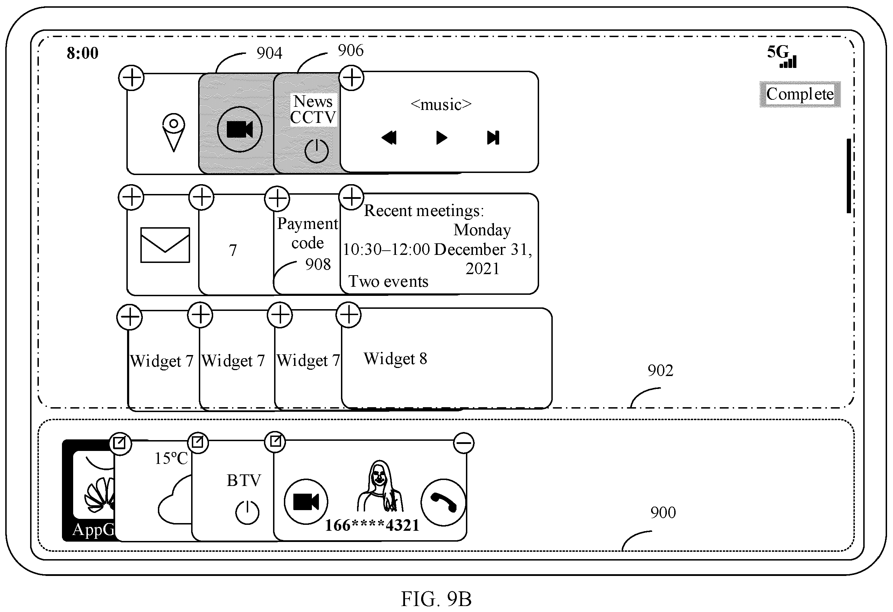

In another example of this application, the user may pinch two fingers inward on the display, and the electronic device 100 may stack widgets in the first preset display area and/or widgets in the second preset display area in response to the pinching operation of the user. Refer to FIG. 9B. The application widgets in the first preset display area are stacked with each other and the application widgets in the second preset display area are stacked with each other.

In an example of this application, widgets may be stacked from one end to the other end of the display of the electronic device. A widget stacking direction may be determined based on a touch location for triggering stacking by the user. For example, refer to FIG. 9A and FIG. 9B. When the touch location of the user is a side close to a first end 909 of the electronic device 100, applications widgets of the electronic device 100 are stacked toward the first end. As shown in FIG. 9A, an area between a central line (a dashed line in the figure) on the display of the electronic device 100 and the first end 909 may be included on the side close to the first end 909 of the electronic device 100. Specifically, when a plurality of touch report points are detected on the electronic device, the electronic device may calculate a touch report point farthest from the center line, to determine a stacking direction.

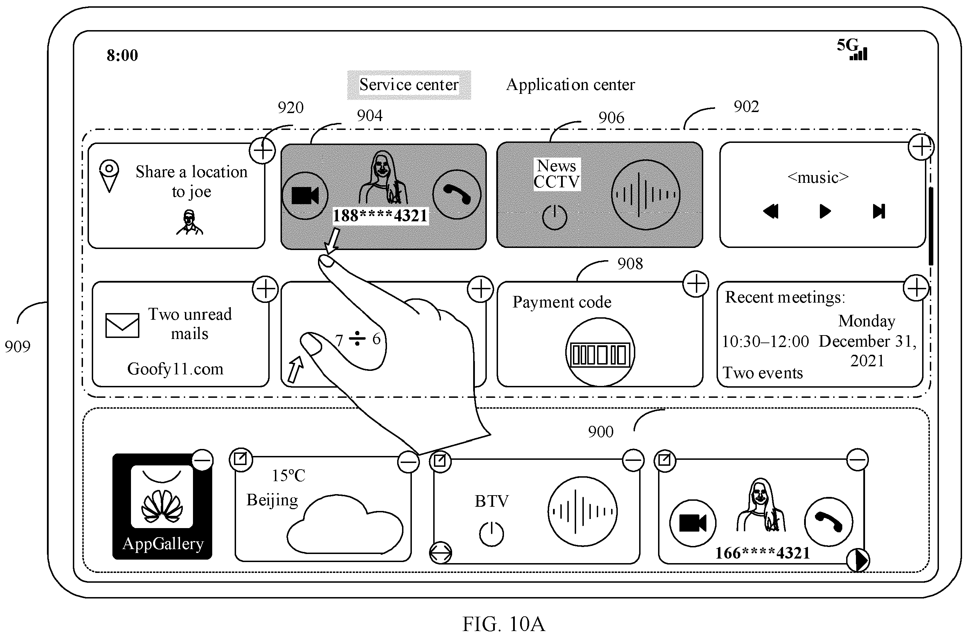

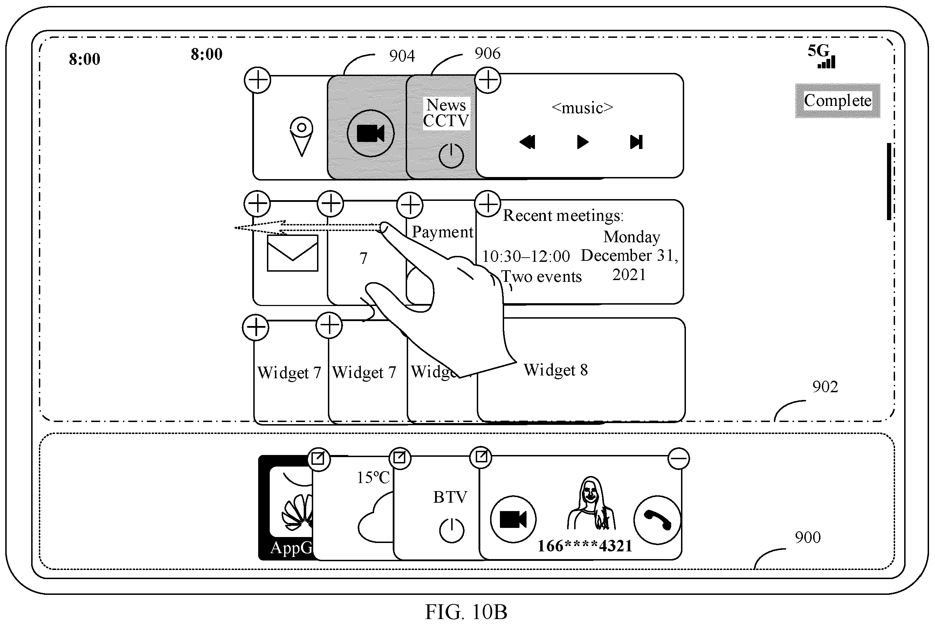

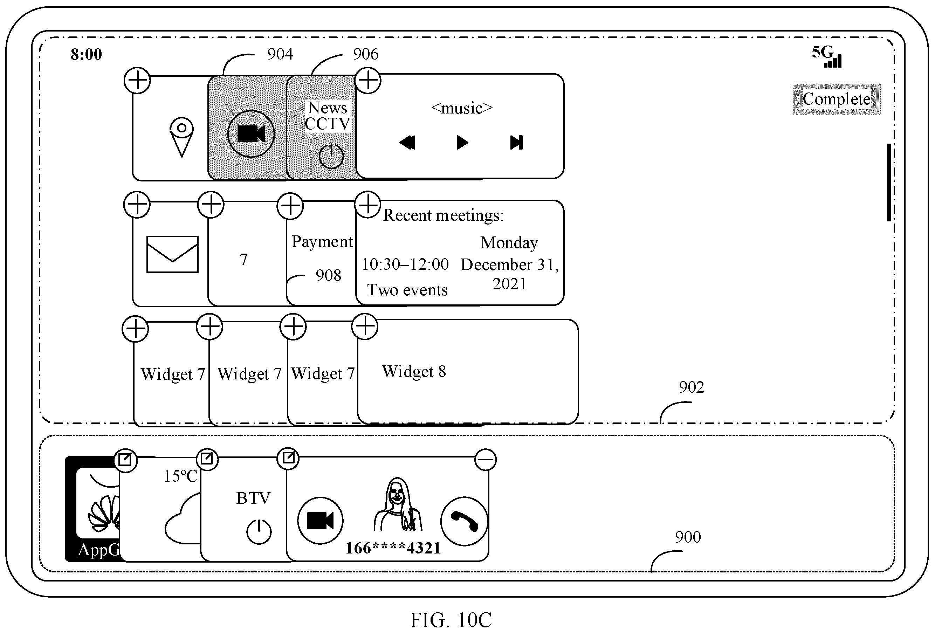

In an example of this application, the widget stacking direction may be determined based on a gesture of the user. For example, refer to FIG. 10A and FIG. 10B. When detecting an operation of pinching the two fingers inward by the user, the electronic device 100 stacks widgets in a middle display area of the electronic device 100. Further, after the user performs the operation of pinching the two fingers inward, based on a sliding direction of the fingers of the user, the electronic device 100 stacks the application widgets in the first preset display area with each other and stacks the application widgets in the second preset display area with each other. As shown in FIG. 10B and FIG. 10C, the electronic device 100 may stack the application widgets toward the first end after the user pinches the two fingers inward and slides toward the first end 909.

After the application widgets are stacked, the application widgets are more compact, and the user can easily manage the application widgets in a limited space area. Optionally, locations of some controls on the application widgets stacked in the second preset display area/the first preset display area may be adjusted, to manage the application widgets more conveniently. For example, refer to FIG. 10A and FIG. 10C. After the application widgets in the second preset display area are stacked, a location of an add control 920 is moved from one end of the application widget to the other end in the second display area. In this way, in a stacking state, the user can add the application widget in the second display area to the dock bar more conveniently.

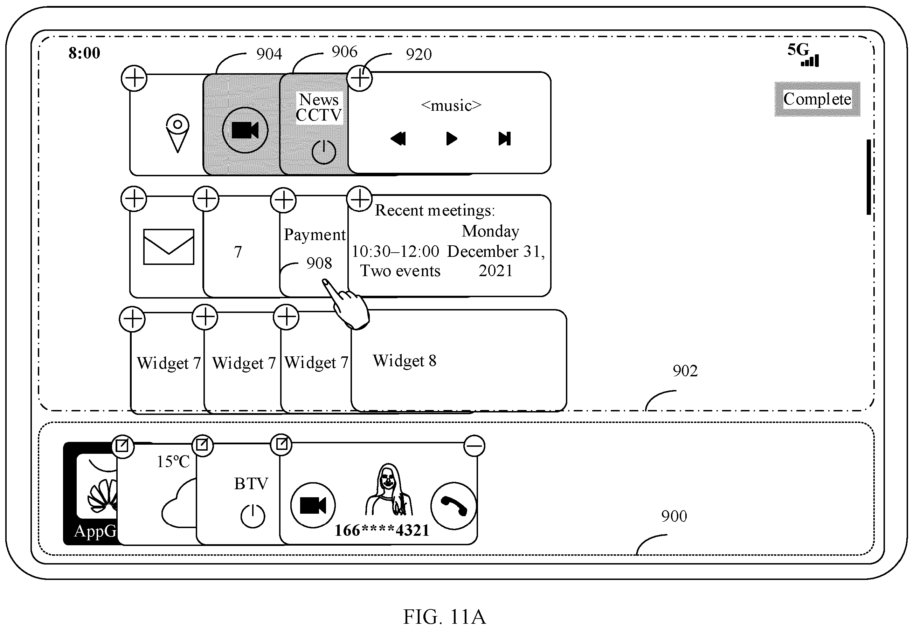

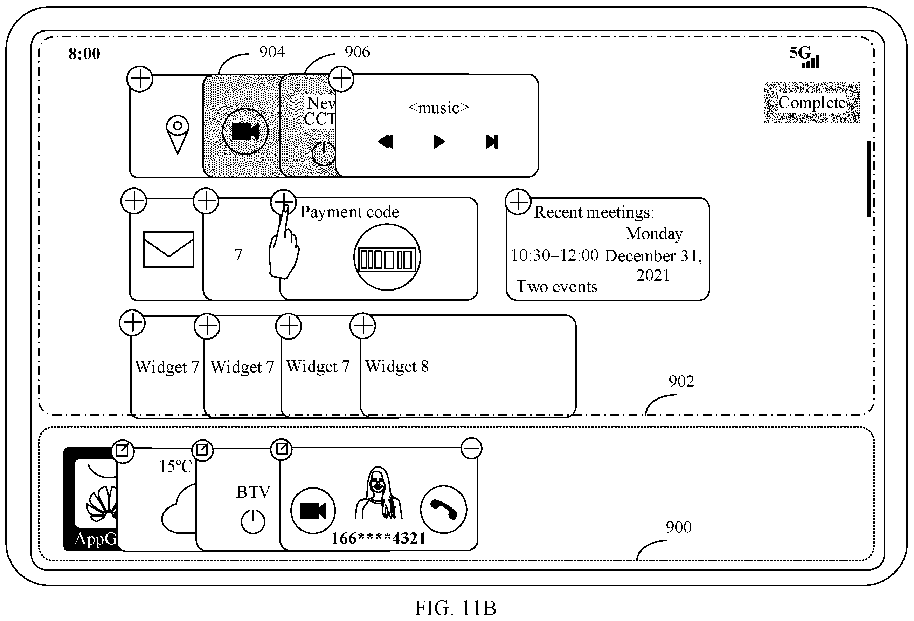

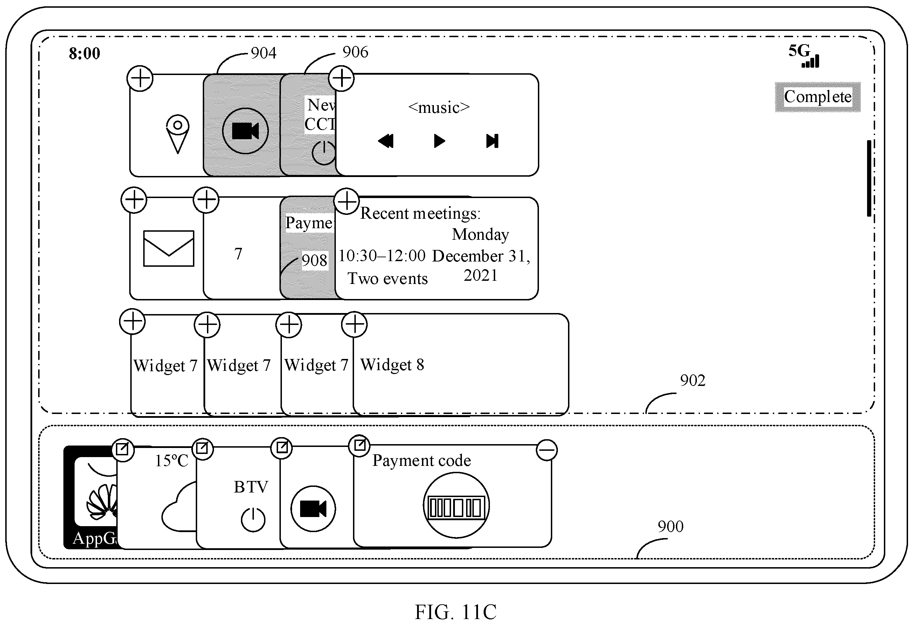

Refer to FIG. 11A, FIG. 11B, FIG. 12A, FIG. 12B, and FIG. 13A to FIG. 13C. The following describes examples of management of stacked application widgets in this application. Refer to FIG. 11A and FIG. 11B. When the user taps a first application widget 908 in the second preset display area, the electronic device 100 may expose the entire first application widget 908. The user may tap the add control 920 on the first application widget 908 to add the application widget 908 to the dock bar, and adjust grayscale of the application widget 908 in the second preset display area 902. In an example of this application, when the application widget in the second preset display area is added to the dock bar, the application widget may be displayed in the dock bar based on an addition ranking of the application widget. For example, when the user adds a new widget, the application widget may be displayed at an end of the dock bar. In another example of this application, when the application widget in the second preset display area is added to the dock bar, the newly added application widget may be displayed in a preset location, for example, displayed in the center of the dock bar. Certainly, the newly added application widget may further have more display manners. This is not limited in this application.

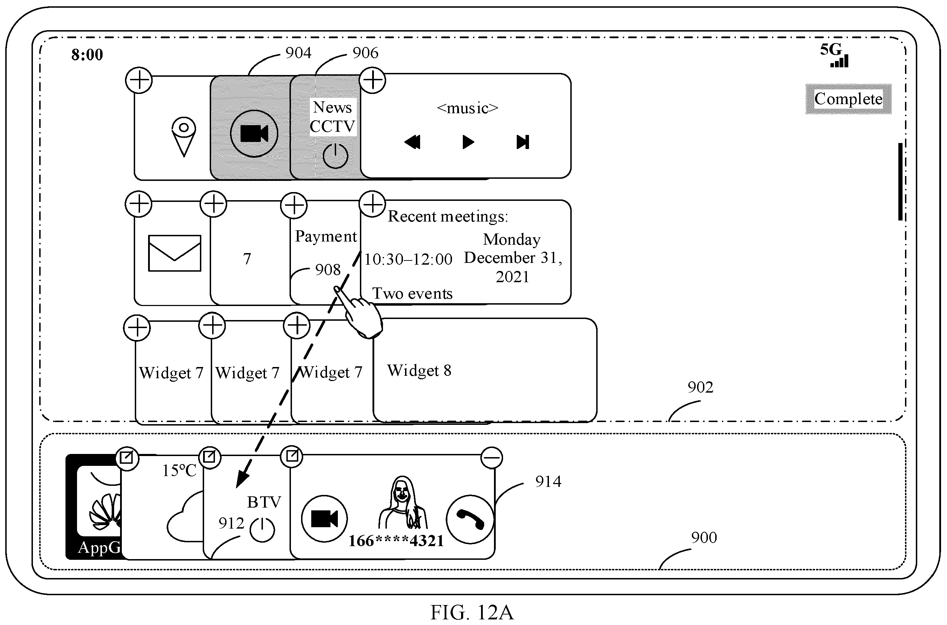

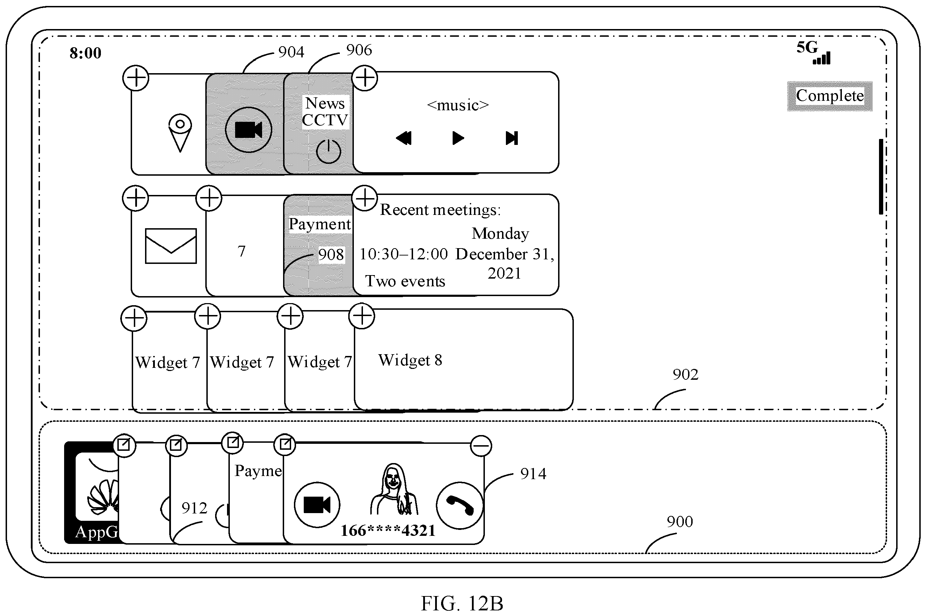

In another embodiment of this application, an application widget in the second preset display area 902 may be further added to the dock bar by dragging. For example, refer to FIG. 12A. The user may drag the application widget 908 in the second display area to an area between the application widget 912 and the application widget 914. The electronic device 100 may add the application widget 908 to the dock bar in response to the drag operation of the user. In addition, an application widget 910 is located between the application widget 912 and the application widget 914. In other words, when an application widget is added by dragging, a ranking of application widgets in the dock bar may be set.

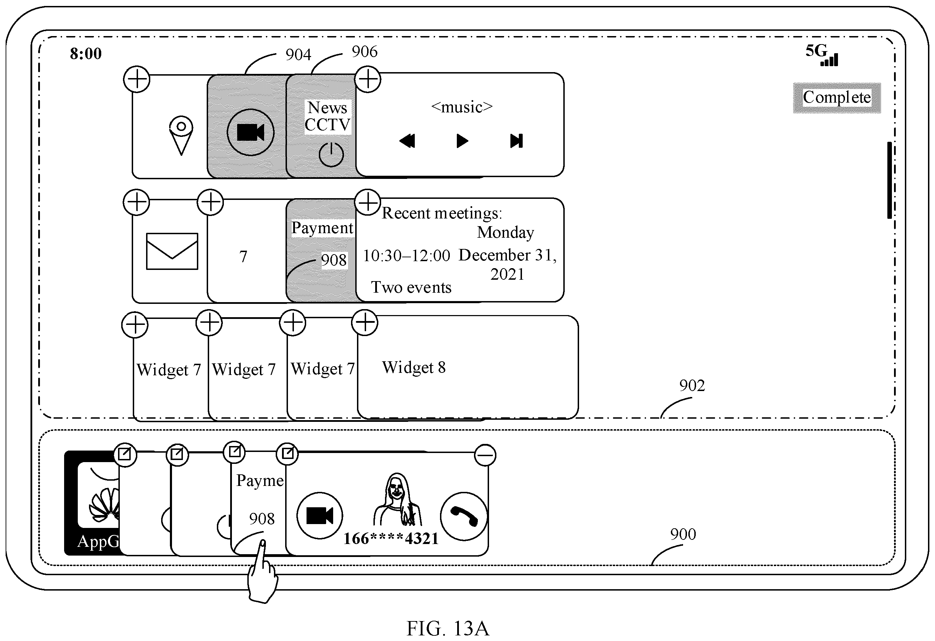

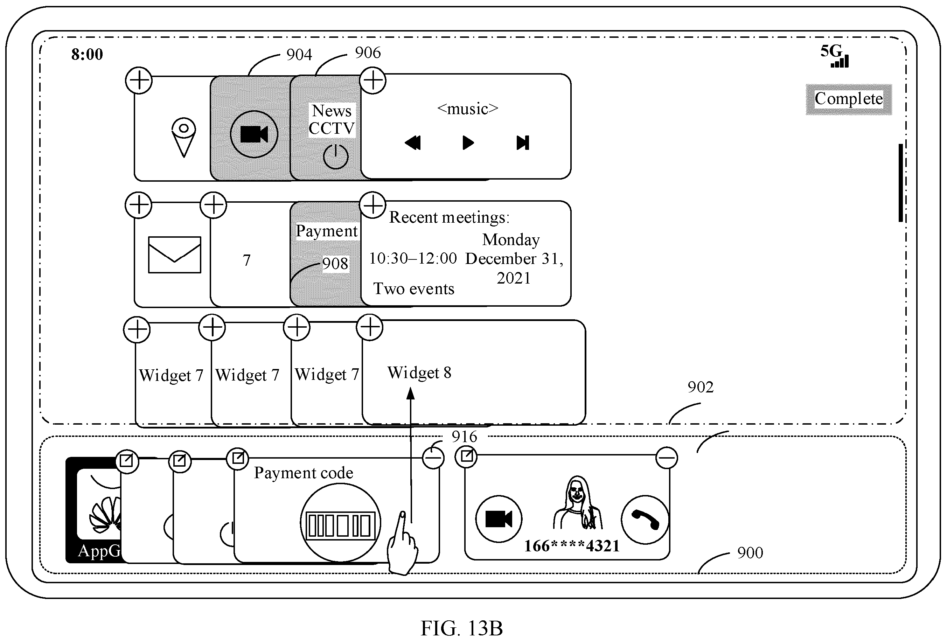

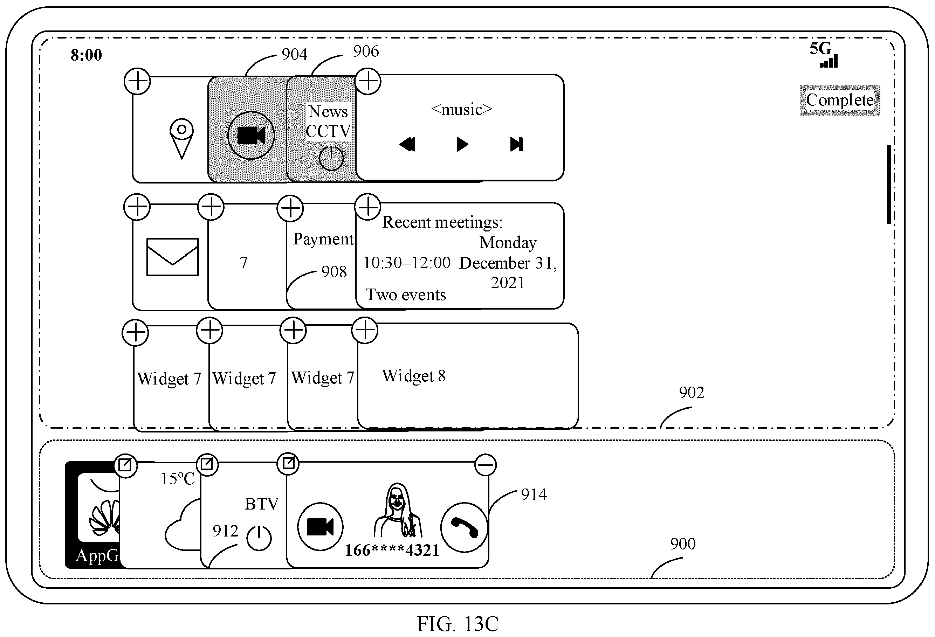

In another embodiment of this application, when the application widgets are in the stacking state, the electronic device 100 may delete the application widget in the dock bar in response to an operation for deleting the application widget. For example, refer to FIG. 13A to FIG. 13C. When the user taps the application widget 908 in the first preset area, the electronic device exposes the entire application widget 910 in response to the tap operation, and the user may tap a delete control 916, so that the electronic device deletes the application widget 910. Alternatively, the user may slide the entire application widget 910 upward, and the electronic device may delete the application widget 910 in response to the sliding operation of the user. It should be noted that, the user does not necessarily tap the application widget 910 first to expose the entire widget, and then perform a deletion operation; instead, the user may directly slide the application widget 910 upward on the interface shown in FIG. 13A to delete the application widget.

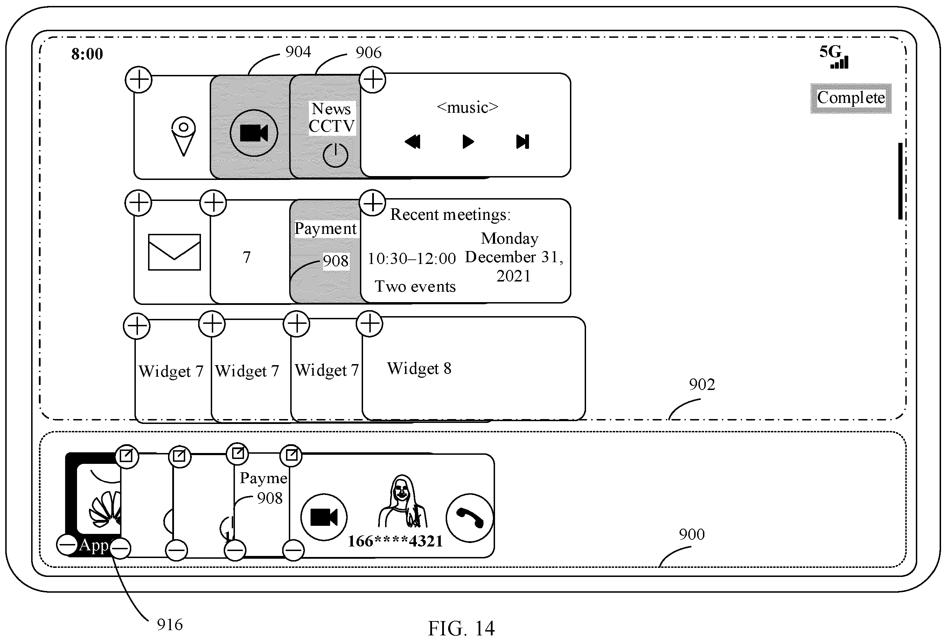

FIG. 14 is specifically a graphical interface of the electronic device 100 according to another embodiment of this application. As shown in FIG. 14, when application widgets are in a stacking state, the delete control 916 in the dock bar may be located at a lower left corner of the application widget. In this way, the user may directly tap the delete control 916 to delete the application in the dock bar, without a need to slide and delete the application widget.

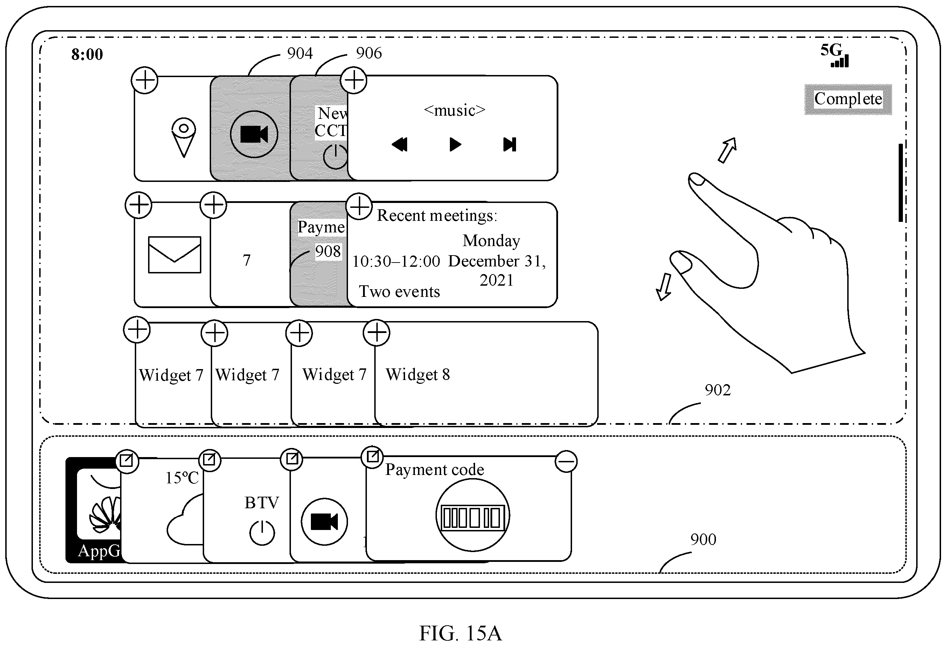

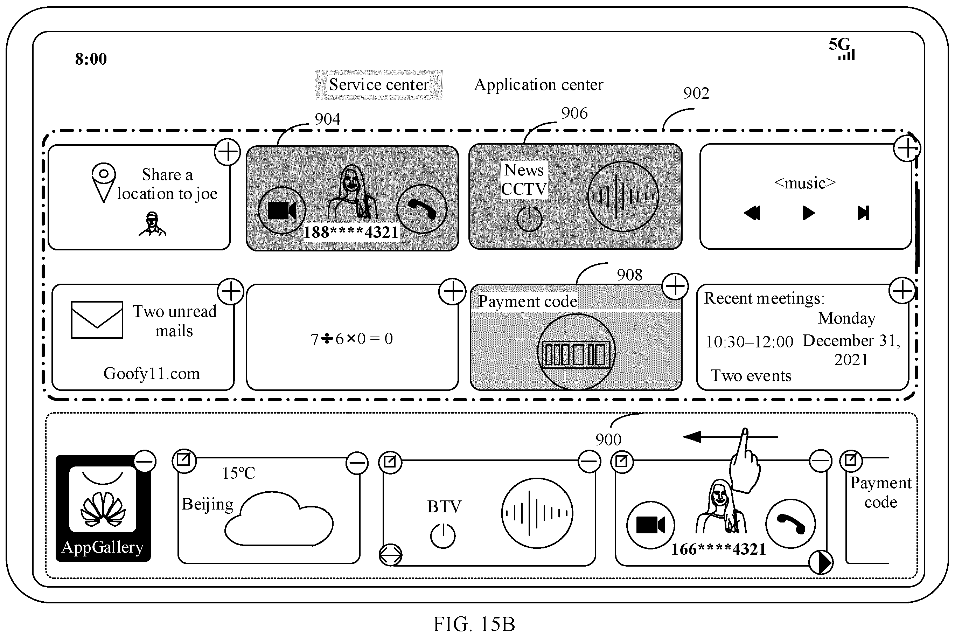

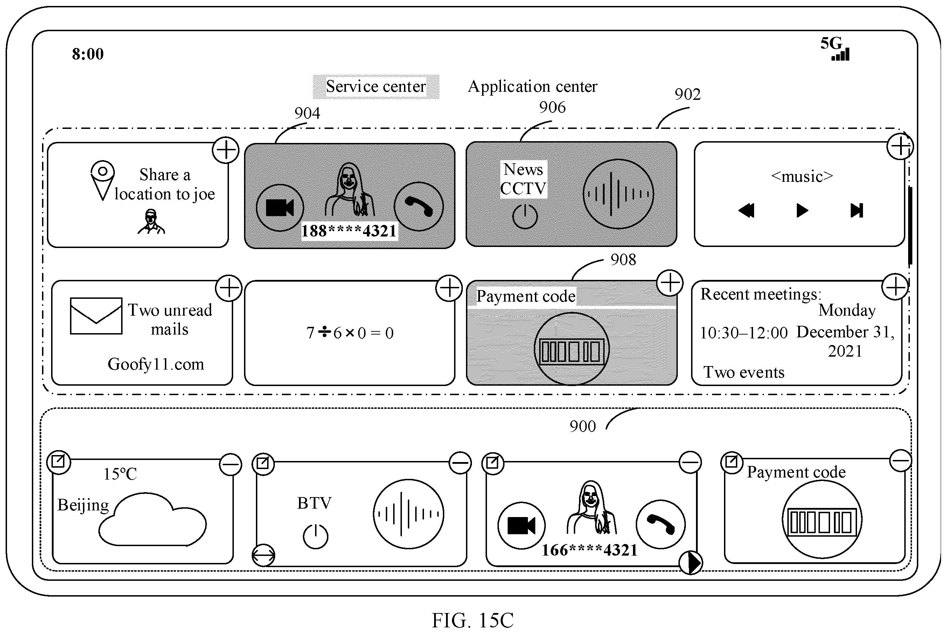

The electronic device 100 may control, by using a plurality of methods, the widget to exit from the stacking state. In an example of this application, a preset control may be set. When the user taps the preset control, the electronic device 100 exits from the stacking state. In another example of this application, refer to FIG. 15A to FIG. 15C. The user may perform an operation of stretching two fingers on the display, and the electronic device enables the application widget to exit from the stacking state in response to the operation. Further, the stacked widgets are sorted and displayed based on stacking rankings. Further, as shown in FIG. 15B and FIG. 15C, an area of the dock bar is limited, and only a limited quantity of application widgets can be displayed. When a quantity of application widgets added by the user exceeds a specific quantity, the user may slide in the dock bar, to display other added application widgets in the dock bar.

In the solution of this application, all application widgets added to the dock bar may be specially managed, to further improve intelligence of a central control operation.

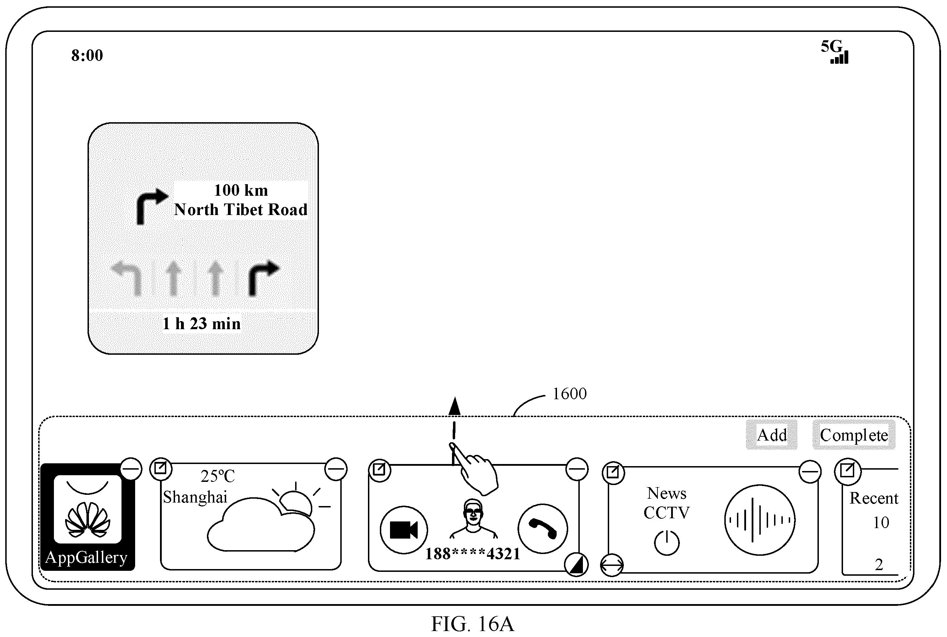

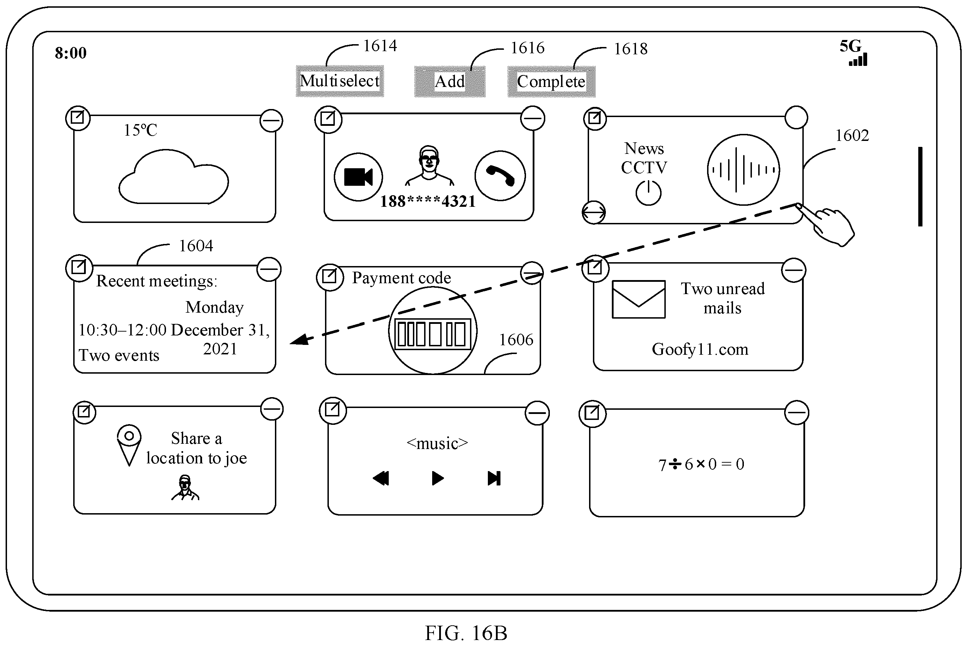

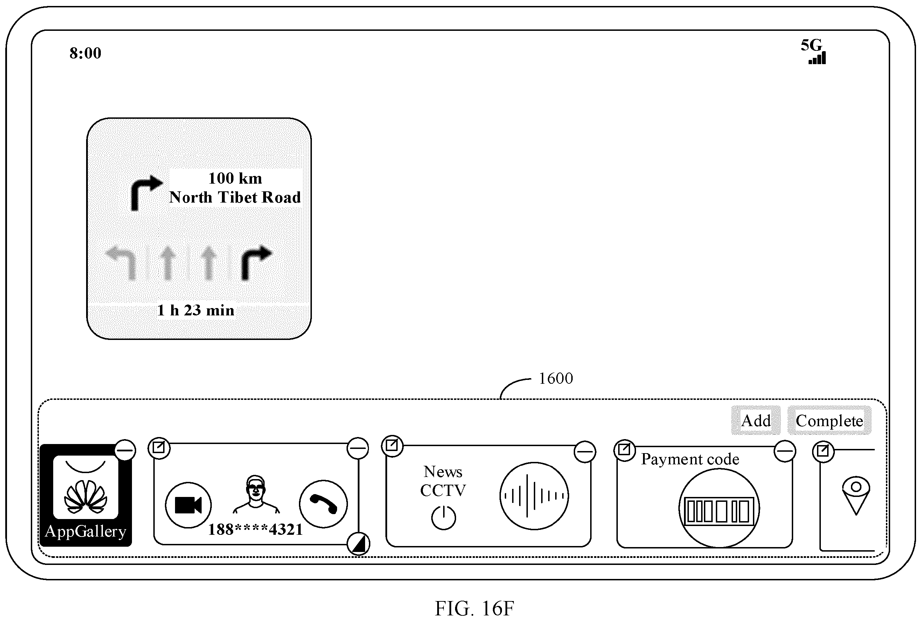

FIG. 16A to FIG. 16F are specifically graphical interfaces of the electronic device 100 according to another embodiment of this application. FIG. 16A shows that, in the first editing state, an application icon and a plurality of application widgets are displayed in the first preset display area (namely, an area corresponding to a dock bar). In an example of this application, the user may slide upward on the dock bar, to enter a management page for managing an application widget that has been added to the dock bar. FIG. 16B shows a plurality of added application widgets. For example, these application widgets may include a first application widget 1602, a second application widget 1604, and a third application widget 1606.

In FIG. 16B, the user may adjust rankings of the application widgets. For example, the user may drag the first application widget 1602 to a location between the second application widget 1604 and the third application widget 1606, and in response to the drag operation of the user, the electronic device 100 enables the first application widget 1602 to be arranged behind the second application widget 1604.

Further, the display interface shown in FIG. 16B includes a multiselect control 1614, an add control 1616, and a complete control 1618. Specifically, when the user taps the add control 1616, the electronic device may enter the foregoing display interface in the second editing state, so that the user can add more application widgets to the dock bar. Further, when the user taps the complete control 1618, the electronic device 100 may return to the graphical interface shown in FIG. 16A. Alternatively, the user may slide downward on the dock bar to return to the graphical interface shown in FIG. 16A.

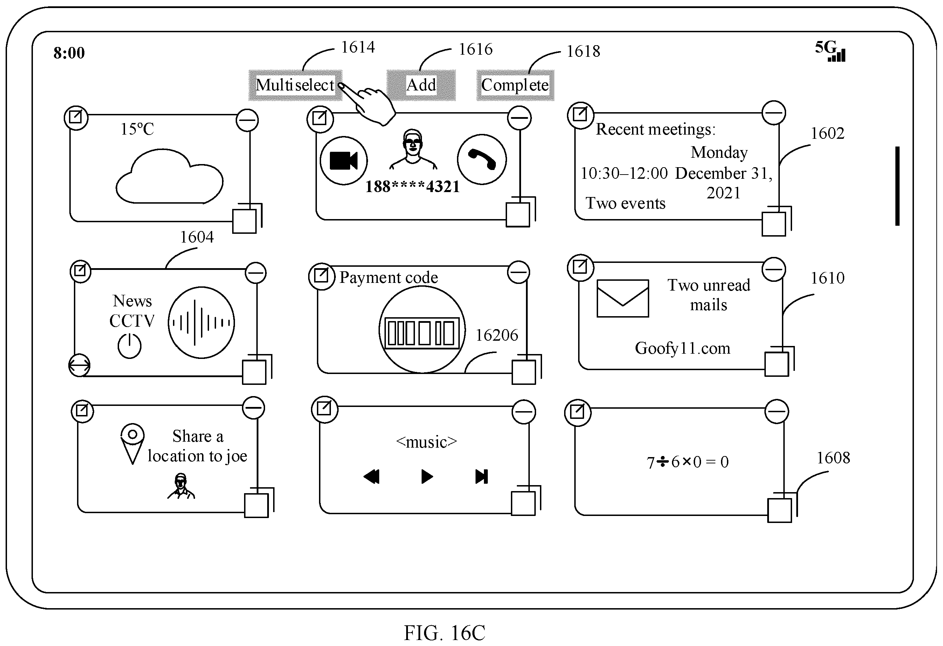

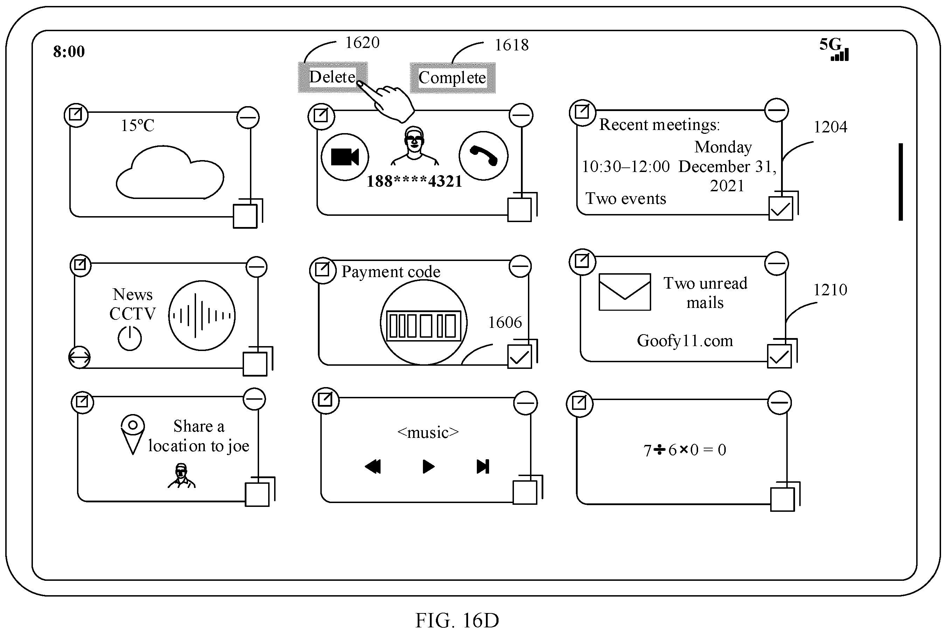

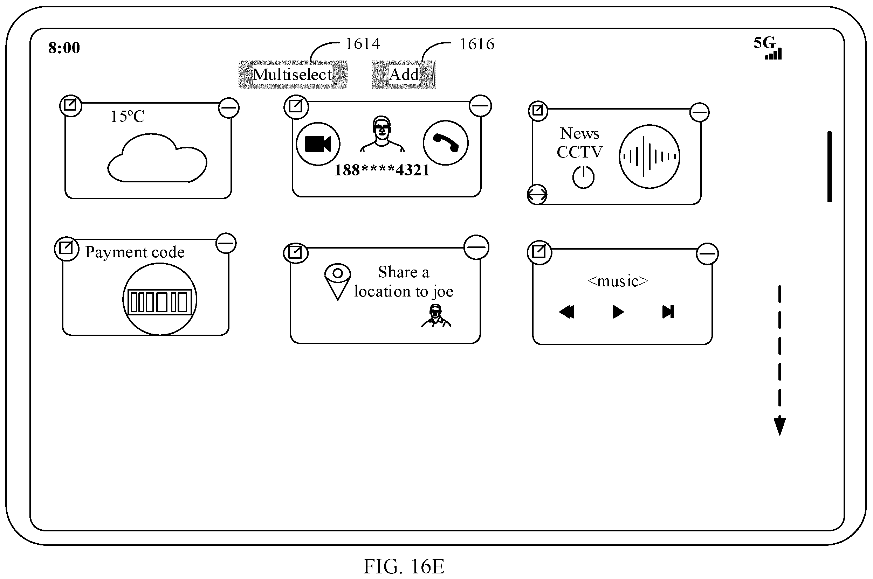

Further, the multiselect control 1614 is configured to perform batch management on the added application widgets. Refer to FIG. 16C and FIG. 16D. When the user taps the multiselect control, the electronic device 100 displays select controls 1608 on the application widgets in response to the tap operation of the user. The user may tap select controls 1608 on widgets to complete a batch selection operation on the application widgets. For example, as shown in FIG. 16D, the user separately selects the select controls 1608 in the second application widget 1604, the third application widget 1606, and the fourth application widget 1610. After batch selection, the user may manage these selected application widgets. For example, refer to FIG. 16D and FIG. 16E. The user may tap a delete control 1620 to delete the second application widget 1604, the third application widget 1606, and the fourth application widget 1610. On a page shown in FIG. 16E, the user may slide downward to return to the first editing state.

Further, application widgets that have been added to the dock bar may be stacked for display, to facilitate the user to manage the application widgets that have been added to the dock bar.

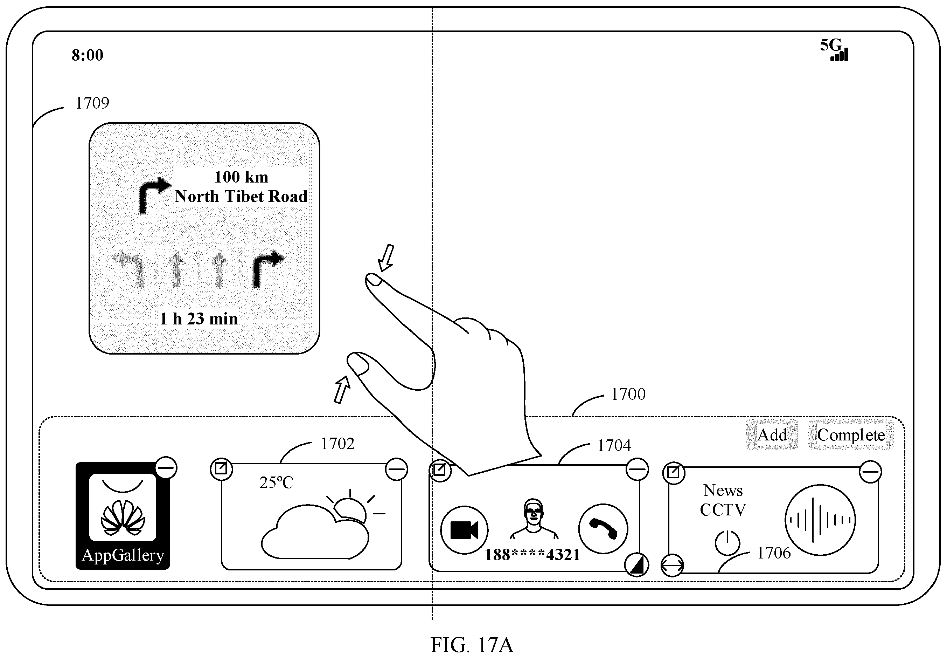

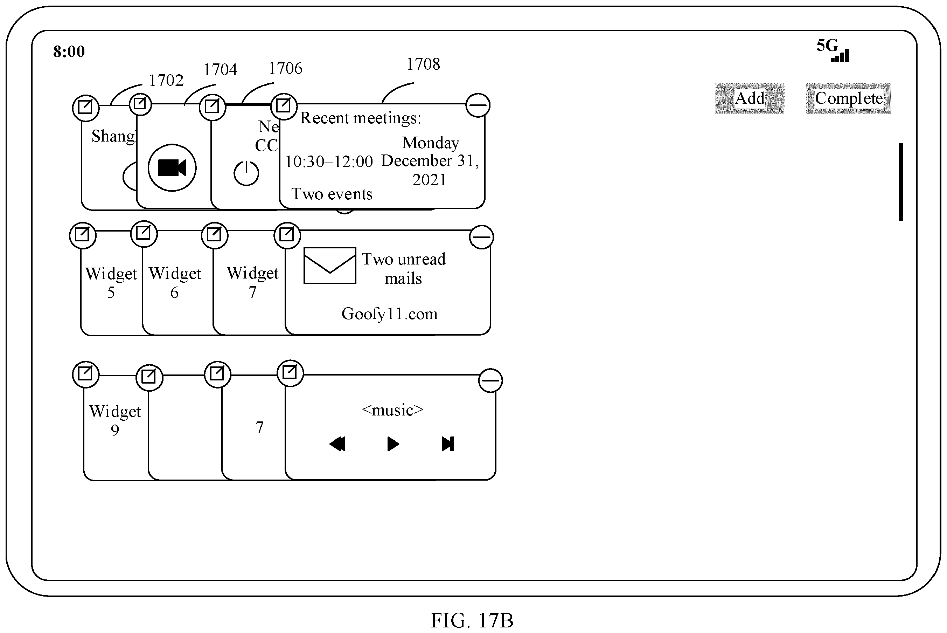

Refer to FIG. 17A and FIG. 17B. In the first editing state, when detecting a preset gesture of the user, the electronic device 100 displays, in a stacking manner, the application widgets that have been added to the dock bar. Certainly, a preset control may be further set on the display interface shown in FIG. 17A. When the user taps the preset control, the electronic device 100 displays application widgets in the dock bar in a stacking manner. As shown in FIG. 17B, the stacked application widgets may include a first application widget 1702, a second application widget 1704, a third application widget 1706, a fourth application widget 1708, a fifth application widget 1710, and the like.

In an example of this application, a widget stacking direction may be determined based on a touch location of the user. Refer to FIG. 17A and FIG. 17B. When the touch location of the user is a side close to a first end 1709 of the electronic device 100, application widgets of the electronic device 100 are stacked toward the first end. As shown in FIG. 17A, an area between a central line (a dashed line in the figure) and the first end may be included on the side close to the first end 1709 of the electronic device 100.

It may be understood that, after the application widgets are stacked, the user may manage, in a smaller space range, each application widget added to the dock bar, for example, delete the application widget or adjust a ranking of a widget.

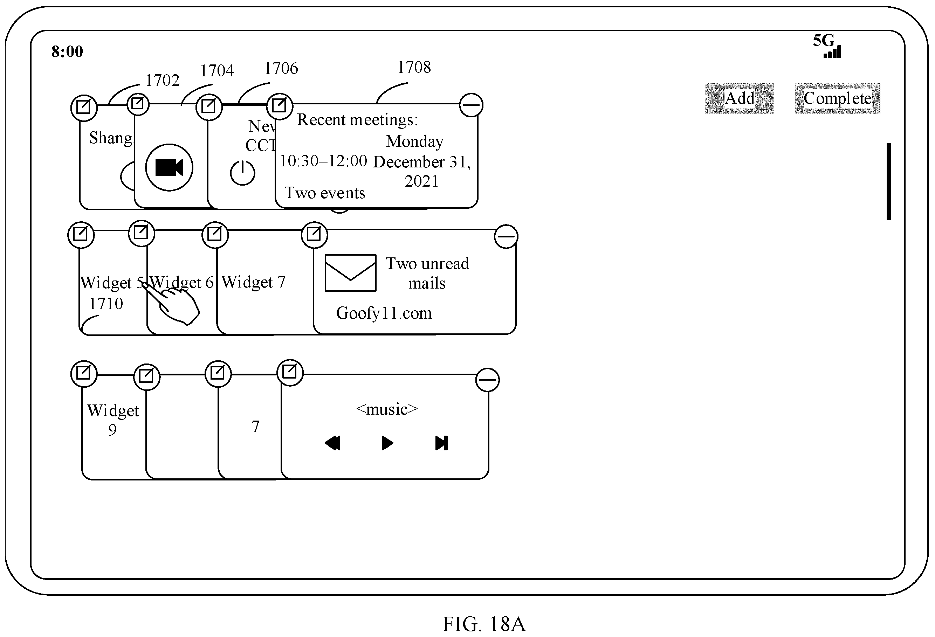

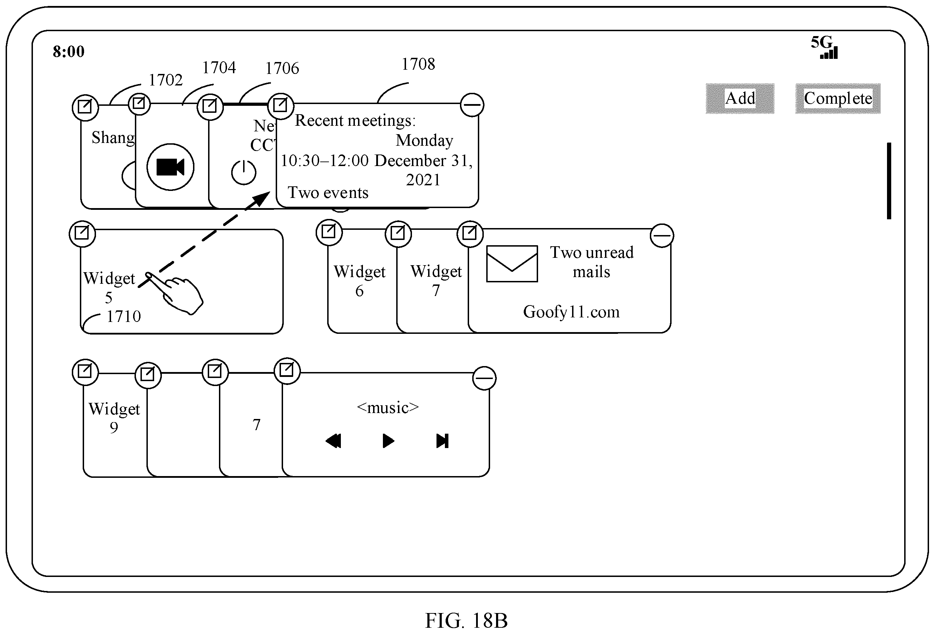

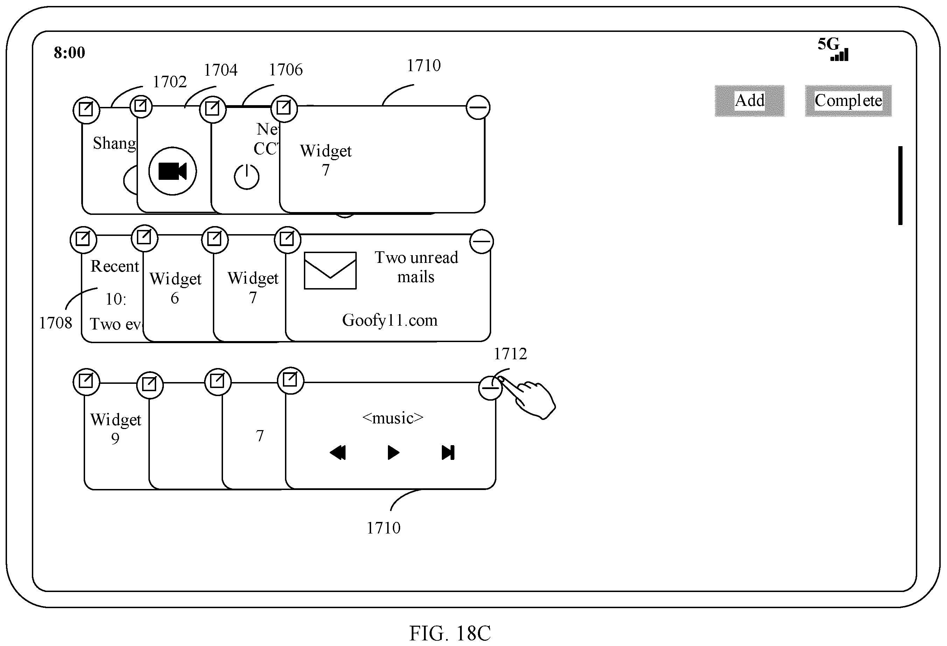

Refer to FIG. 18A and FIG. 18B. FIG. 18A shows a plurality of stacked application widgets that have been added to the dock bar. When the user touches some areas of the fifth application widget 1710, the electronic device may expose and display the entire fifth application widget 1710. Further, the user may adjust a ranking of the fifth application widget 1710 in a dragging manner. For example, refer to FIG. 18B and FIG. 18C. The user may drag the fifth application widget 171 to a middle area between the third application widget 1706 and the fourth application widget 1708, and the electronic device 100 may adjust rankings of the fourth application widget 1708 and the fifth application widget 1710 in response to the drag operation.

Further, each application widget includes a delete control 1712. The electronic device may tap a delete control 1712 on a sixth application widget 1714 to delete the sixth application widget 1714.

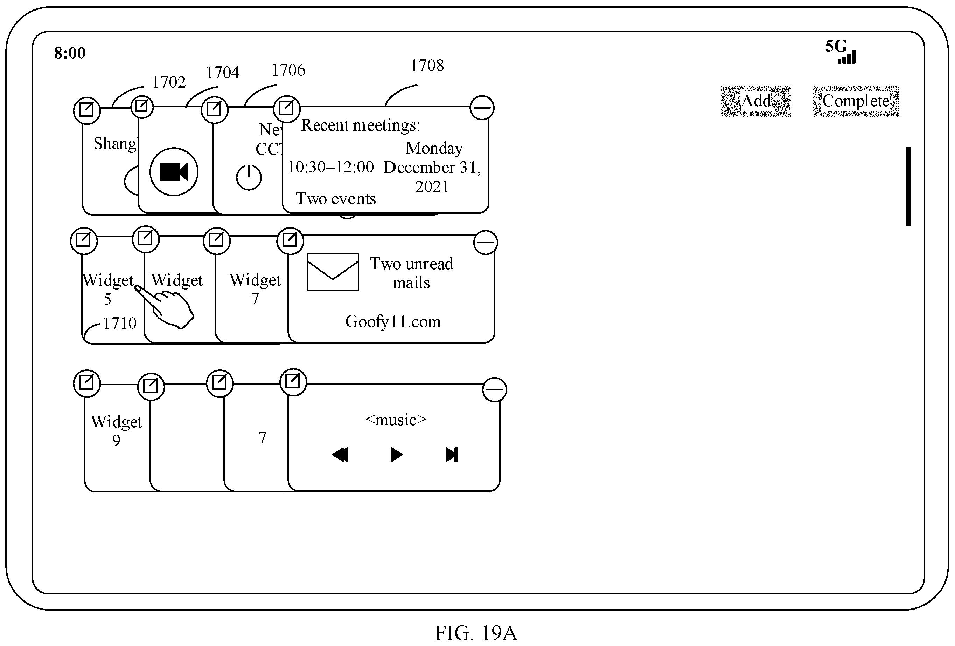

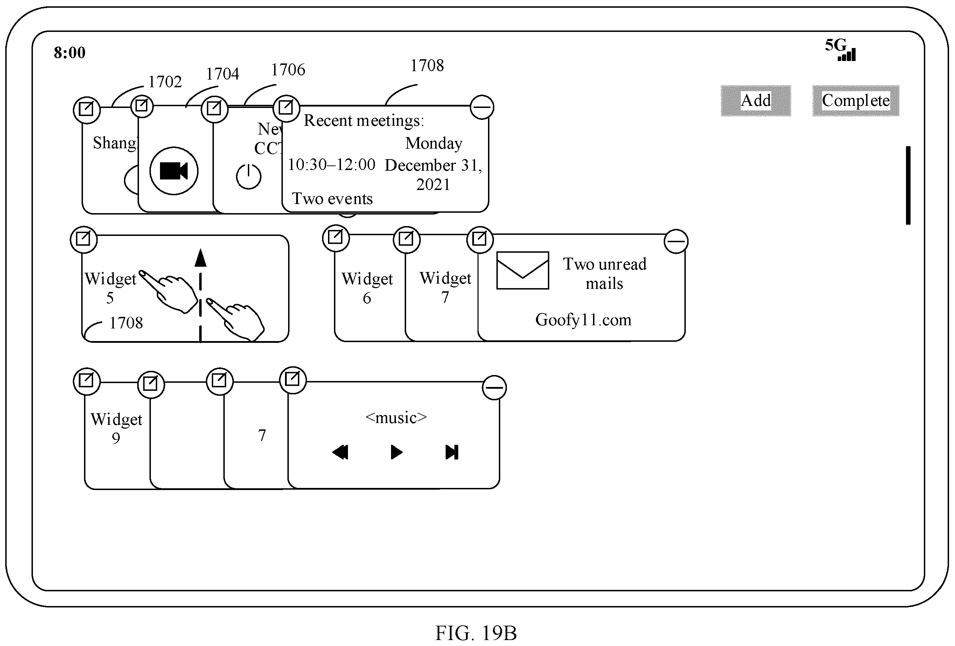

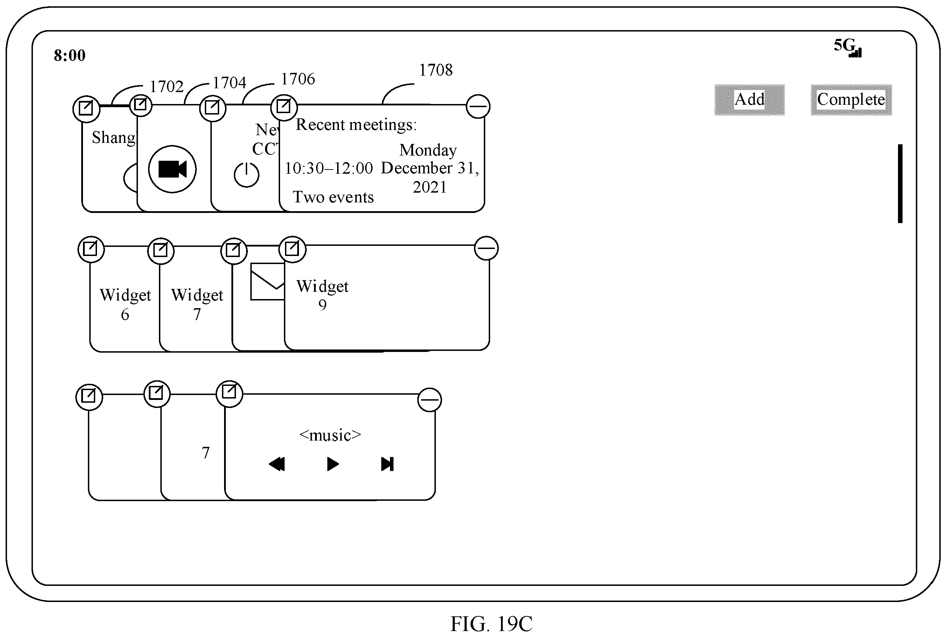

Certainly, an added application widget may be deleted in another manner. For example, refer to FIG. 19A and FIG. 19B. When the user touches some areas of the fifth application widget 1710, the electronic device may expose and display the entire fifth application widget 1710. Further, on a graphical interface shown in FIG. 19B, the user may slide the fifth application widget 1710 upward, to delete the application widget.

Compared with the conventional technology, the application widget management method provided in this application can further improve intelligence of an electronic device, for example, a head unit.

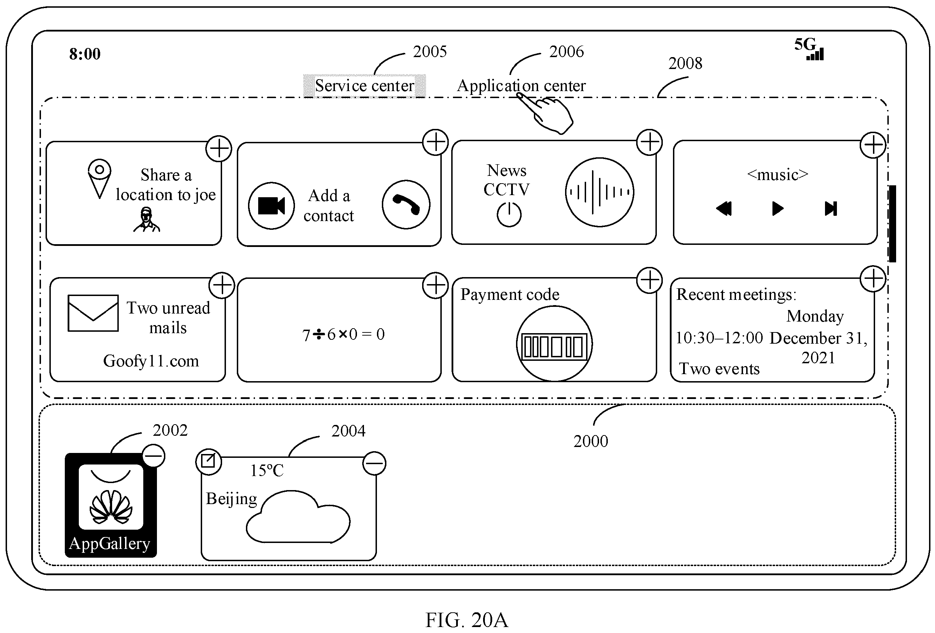

In another embodiment of this application, an application icon in the dock bar may be further managed. The following further explains and describes the application widget management method in this application with reference to FIG. 20A to FIG. 20C. FIG. 20A to FIG. 20C are specifically example diagrams of graphical interfaces of the electronic device 100 according to an embodiment of this application.

Refer to FIG. 20A. In the second editing state, a first application icon 2002 and an application widget 2004 are displayed in a first preset display area 2000 of the electronic device 100, and a plurality of non-added application widgets are displayed in a second preset display area 2008. When the user may tap a preset control 2006 on the display, the electronic device 100 displays a plurality of application icons in the second display area in response to the tap operation. The application icons include a first application 2002 that is added to the dock bar and an application icon that is not added to the dock bar, for example, a second application 2014.

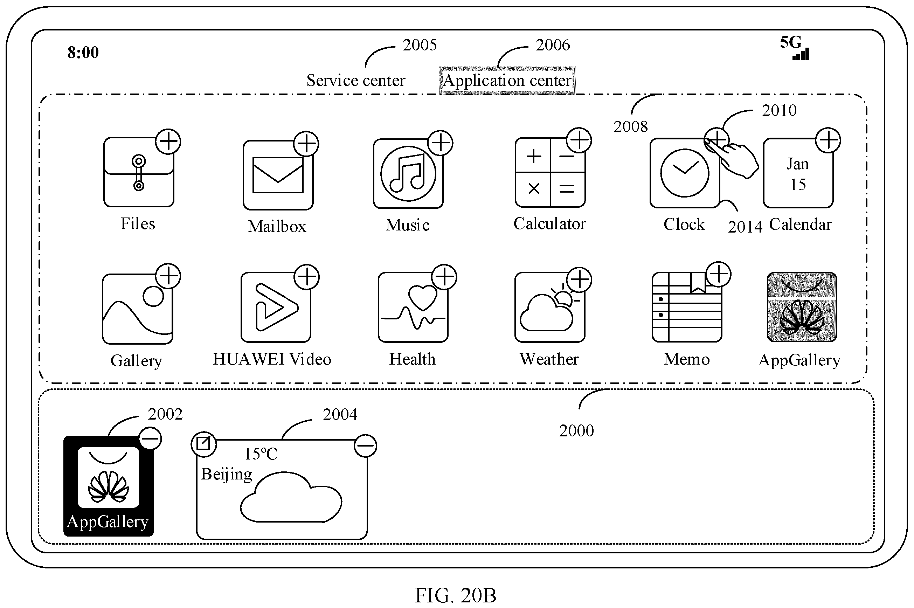

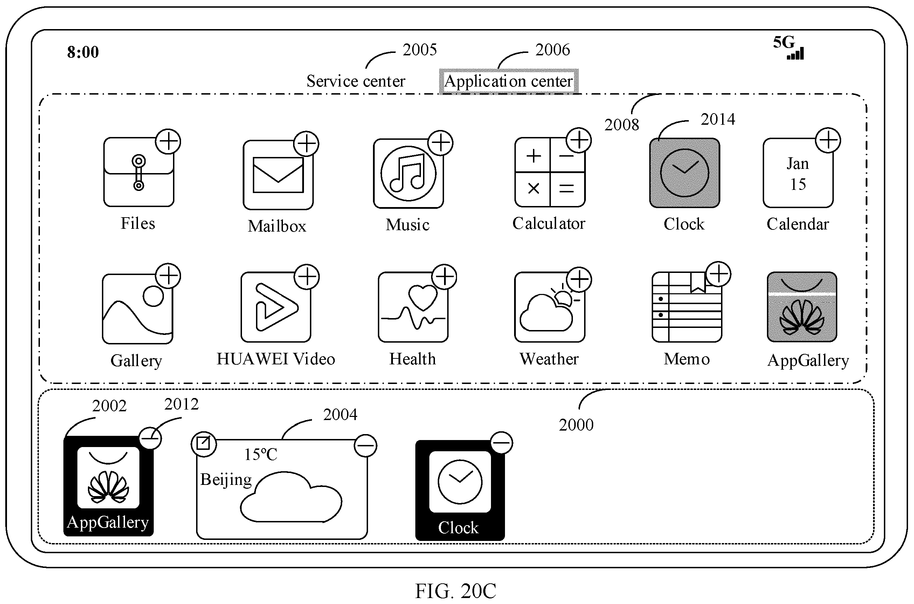

The user may add the application icon in the second preset display area 2008 to the dock bar in a plurality of manners. In an example of this application, each application icon in the second preset display area may include an add control 2010. As shown in FIG. 20B and FIG. 20C, the user may tap the addition control on the application 2014, to add the application 2014 to the dock bar. In another example of this application, when detecting that the user drags the application icon 2014 in the second display area to the dock bar, the electronic device 100 adds the application icon 2014 to the dock bar. Further, in this application, an icon that has been added to the dock bar may not be displayed in the second preset display area 2008, or an icon that has been added to the dock bar may be grayed.

Further, in the second editing state, a delete control 2012 is displayed on an application icon added to the dock bar, and the electronic device may delete the application icon in the dock bar in response to tapping the delete control 2012 by the user. In another example of this application, the electronic device 100 may alternatively delete an application icon in response to dragging the application icon in the dock bar to the second display area by the user.

Further, in an example of this application, one or more application icons preset in the system may be displayed in the dock bar. In the first/second editing state, a delete control may not be displayed on the application icon preset in the system, that is, the user cannot delete the application icon from the dock bar.

An application icon may be further managed according to the application widget management method in this application. This further improves intelligence of a central control operation.

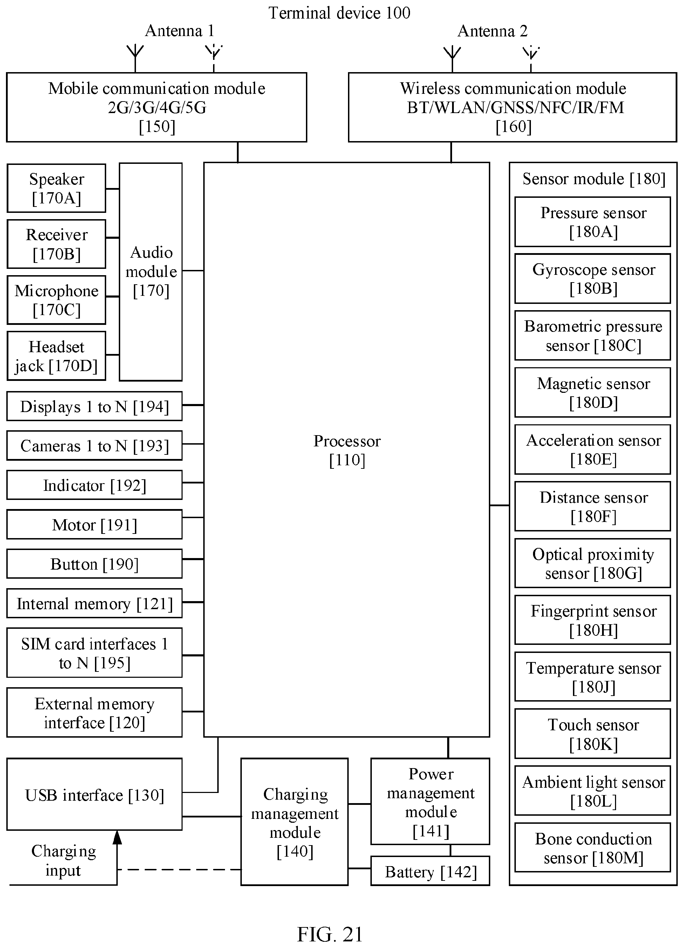

FIG. 21 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 via the DSI interface, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to other electronic devices such as an AR device.

It may be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may also be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules in the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external storage card, for example, a micro-SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created when the electronic device 100 is used. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or voice information is received by using the electronic device 100, the receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor.

The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 180B may be configured to determine a moving posture of the electronic device 100. In some embodiments, an angular velocity of the electronic device 100 around three axes (namely, x, y, and z axes) may be determined by using the gyroscope sensor 180B. The gyroscope sensor 180B may be configured to implement image stabilization during photographing. For example, when the shutter is opened, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement the image stabilization. The gyroscope sensor 180B may also be used in a navigation scenario and a motion sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is static, the acceleration sensor 180E may detect a magnitude and a direction of gravity. The acceleration sensor 180E may be further configured to identify a posture of the electronic device, and is used in screen switching between a landscape mode and a portrait mode, a pedometer, or another application.

The distance sensor 180F is configured to measure a distance. The electronic device 100 may measure the distance through infrared or laser. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When abundant reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. For touch operations performed on different areas of the display 194, the motor 191 may alternatively correspond to different vibration feedback effects. Different application scenarios (for example, a time reminder, information receiving, an alarm clock, and a game) may alternatively correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

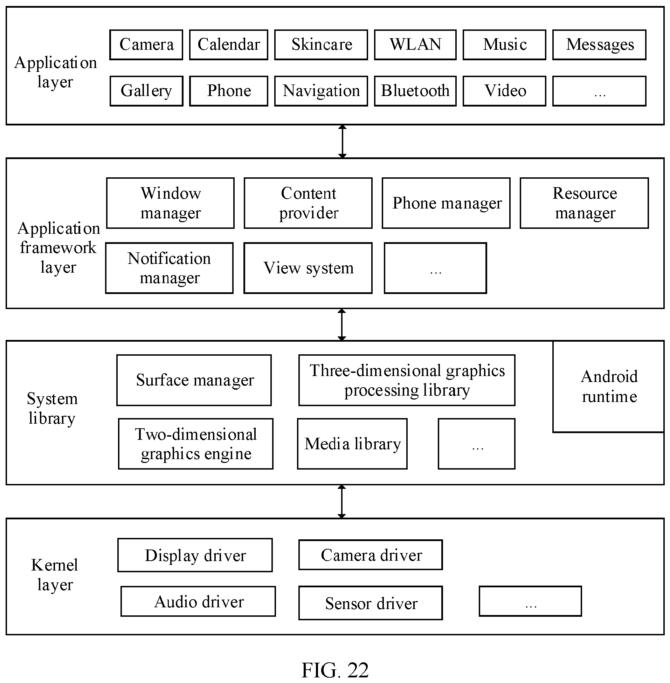

FIG. 22 is a block diagram of a software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 22, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 22, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording of a plurality of common audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

An embodiment of this application further provides a computer-readable storage medium. The computer-readable storage medium includes computer instructions. When the computer instructions are run on an electronic device, the electronic device is enabled to perform the display method provided in this application.

Functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk drive, a read-only memory, a random access memory, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. An application widget display method, applied to an electronic device (100), wherein the method comprises:
displaying an application widget in a first preset display area, and displaying a first interface in a second preset display area, wherein the application widget comprises a first application widget and a second application widget;
in response to a received first input, entering a first editing state for the application widget, displaying the application widget in a third preset display area, displaying the first interface in a fourth preset display area, displaying a first control in a first location of the third preset display area, and displaying a second control in a second location, wherein the first location corresponds to the first application widget, the second location corresponds to the second application widget, the first control is configured to set the first application widget, the second control is configured to set the second application widget, the third preset display area corresponds to the first preset display area, and the fourth preset display area corresponds to the second preset display area; and
in response to a received second input, entering a second editing state for the application widget, displaying the application widget in a fifth preset display area, and displaying, in a sixth preset display area, an application widget that is not added to the first preset display area, wherein the fifth preset display area corresponds to the first preset display area, and the sixth preset display area corresponds to the second preset display area,
wherein the method comprises:
displaying application widgets in the fifth preset display area and/or application widgets in the sixth preset display area in a stack manner in response to a received third input, and
wherein the displaying application widgets in the fifth preset display area and/or application widgets in the sixth preset display area in a stack manner in response to a received third input comprises:
obtaining one or more touch report points of the third input; and
calculating a distance between the touch report point and a preset location on a display, and displaying the application widgets in the fifth preset display area and/or the application widgets in the sixth preset display area in the stack manner based on the distance.

2. The display method according to claim 1, wherein the method further comprises:
in response to a fourth input for a third application widget displayed in the sixth preset display area, displaying the third application widget in the fifth preset display area, and adjusting grayscale of the third application widget in the sixth preset display area; or
in response to a fourth input for a third application widget displayed in the sixth preset display area, displaying the third application widget in the fifth preset display area, and deleting the third application widget displayed in the sixth preset display area.

3. The display method according to claim 2, wherein after the displaying the third application widget in the fifth preset display area, the method further comprises:
in response to a received fifth input, exiting from the second editing state, and displaying, in the first preset display area, the third application widget that has been added to the fifth preset display area.

4. The display method according to any one of claims 1 to 3, wherein
the setting the first application widget comprises: editing display content of the first application widget, deleting the first application widget, or adjusting a size of the first application widget; and
the setting the second application widget comprises: editing display content of the second application widget, deleting the second application widget, or adjusting a size of the second application widget.

5. The display method according to claim 4, wherein the first control is an editing control; and the method further comprises:
receiving a sixth input for the editing control of the first application widget; and
displaying an editing page of the first application widget in response to the sixth input, wherein the editing page is used to edit the display content of the first application widget.

6. The display method according to claim 4, wherein the first control is a size control; and the method further comprises:
receiving a seventh input for the size control of the first application widget; and
adjusting the size of the first application widget in response to the seventh input.

7. The display method according to any one of claims 1 to 6, wherein the displaying application widgets in the fifth preset display area and/or application widgets in the sixth preset display area in a stack manner in response to a received third input comprises:
if the touch report point is located in a first area of a display, displaying, in the first area, the application widgets in the fifth preset display area and/or the application widgets in the sixth preset display area in the stack manner.

8. The display method according to claim 1, wherein the first interface comprises a desktop wallpaper or an application interface.

9. An electronic device (100), comprising a processor (110) and a storage device (121), wherein the storage device (121) stores program instructions, and when the program instructions are run by the processor (110), the electronic device (100) is enabled to perform the display method according to any one of claims 1 to 7.

10. A computer-readable storage medium, comprising computer instructions, wherein when the computer instructions are run on an electronic device, the electronic device is enabled to perform the display method according to any one of claims 1 to 7.

## Patentansprüche

1. Anwendungs-Widget-Anzeigeverfahren, das auf eine elektronische Vorrichtung (100) angewendet wird, wobei das Verfahren Folgendes umfasst:
Anzeigen eines Anwendungs-Widgets in einem ersten voreingestellten Anzeigebereich und Anzeigen einer ersten Schnittstelle in einem zweiten voreingestellten Anzeigebereich, wobei das Anwendungs-Widget ein erstes Anwendungs-Widget und ein zweites Anwendungs-Widget umfasst;
als Reaktion auf eine empfangene erste Eingabe, Aktivieren eines ersten Bearbeitungszustands für das Anwendungs-Widget, Anzeigen des Anwendungs-Widgets in einem dritten voreingestellten Anzeigebereich, Anzeigen der ersten Schnittstelle in einem vierten voreingestellten Anzeigebereich, Anzeigen eines ersten Steuerelements an einer ersten Position des dritten voreingestellten Anzeigebereichs und Anzeigen eines zweiten Steuerelements an einer zweiten Position, wobei die erste Position dem ersten Anwendungs-Widget entspricht, die zweite Position dem zweiten Anwendungs-Widget entspricht, das erste Steuerelement dazu konfiguriert ist, das erste Anwendungs-Widget einzustellen, das zweite Steuerelement dazu konfiguriert ist, das zweite Anwendungs-Widgets einzustellen, der dritte voreingestellte Anzeigebereich dem ersten voreingestellten Anzeigebereich entspricht und der vierte voreingestellte Anzeigebereich dem zweiten voreingestellten Anzeigebereich entspricht; und,
als Reaktion auf eine empfangene zweite Eingabe, Aktivieren eines zweiten Bearbeitungszustands für das Anwendungs-Widget, Anzeigen des Anwendungs-Widgets in einem fünften voreingestellten Anzeigebereich und Anzeigen, in einem sechsten voreingestellten Anzeigebereich, eines Anwendungs-Widgets, das dem ersten voreingestellten Anzeigebereich nicht hinzugefügt wird, wobei der fünfte voreingestellte Anzeigebereich dem ersten voreingestellten Anzeigebereich entspricht und der sechste voreingestellte Anzeigebereich dem zweiten voreingestellten Anzeigebereich entspricht,
wobei das Verfahren Folgendes umfasst:
Anzeigen von Anwendungs-Widgets in dem fünften voreingestellten Anzeigebereich und/oder von Anwendungs-Widgets in dem sechsten voreingestellten Anzeigebereich in einer gestapelten Form als Reaktion auf eine empfangene dritte Eingabe, und
wobei das Anzeigen von Anwendungs-Widgets in dem fünften voreingestellten Anzeigebereich und/oder von Anwendungs-Widgets in dem sechsten voreingestellten Anzeigebereich in einer gestapelten Form als Reaktion auf eine empfangene dritte Eingabe Folgendes umfasst:
Erlangen eines oder mehrerer Berührungsmeldepunkte der dritten Eingabe; und
Berechnen eines Abstands zwischen dem Berührungsmeldepunkt und einer voreingestellten Position auf einer Anzeige und Anzeigen der Anwendungs-Widgets in dem fünften voreingestellten Anzeigebereich und/oder der Anwendungs-Widgets in dem sechsten voreingestellten Anzeigebereich in der gestapelten Form basierend auf dem Abstand.

2. Anzeigeverfahren nach Anspruch 1, wobei das Verfahren ferner Folgendes umfasst:
als Reaktion auf eine vierte Eingabe für ein drittes Anwendungs-Widget, das in dem sechsten voreingestellten Anzeigebereich angezeigt wird, Anzeigen des dritten Anwendungs-Widgets in dem fünften voreingestellten Anzeigebereich und Anpassen einer Graustufe des dritten Anwendungs-Widgets in dem sechsten voreingestellten Anzeigebereich; oder
als Reaktion auf eine vierte Eingabe für ein drittes Anwendungs-Widget, das in dem sechsten voreingestellten Anzeigebereich angezeigt wird, Anzeigen des dritten Anwendungs-Widgets in dem fünften voreingestellten Anzeigebereich und Löschen des dritten Anwendungs-Widgets, das in dem sechsten voreingestellten Anzeigebereich angezeigt wird.

3. Anzeigeverfahren nach Anspruch 2, wobei das Verfahren nach dem Anzeigen des dritten Anwendungs-Widgets in dem fünften voreingestellten Anzeigebereich ferner Folgendes umfasst:
als Reaktion auf eine empfangene fünfte Eingabe, Beenden des zweiten Bearbeitungszustands und Anzeigen, in dem ersten voreingestellten Anzeigebereich, des dritten Anwendungs-Widgets, das dem fünften voreingestellten Anzeigebereich hinzugefügt wurde.

4. Anzeigeverfahren nach einem der Ansprüche 1 bis 3, wobei das Einstellen des ersten Anwendungs-Widgets Folgendes umfasst:
Bearbeiten von Anzeigeinhalt des ersten Anwendungs-Widgets, Löschen des ersten Anwendungs-Widgets oder Anpassen einer Größe des ersten Anwendungs-Widgets; und
das Einstellen des zweiten Anwendungs-Widgets Folgendes umfasst: Bearbeiten von Anzeigeinhalt des zweiten Anwendungs-Widgets, Löschen des zweiten Anwendungs-Widgets oder Anpassen einer Größe des zweiten Anwendungs-Widgets.

5. Anzeigeverfahren nach Anspruch 4, wobei das erste Steuerelement ein Bearbeitungssteuerelement ist; und das Verfahren ferner Folgendes umfasst:
Empfangen einer sechsten Eingabe für das Bearbeitungssteuerelement des ersten Anwendungs-Widgets; und
Anzeigen einer Bearbeitungsseite des ersten Anwendungs-Widgets als Reaktion auf die sechste Eingabe, wobei die Bearbeitungsseite dazu verwendet wird, den Anzeigeinhalt des ersten Anwendungs-Widgets zu bearbeiten.

6. Anzeigeverfahren nach Anspruch 4, wobei das erste Steuerelement ein Größensteuerelement ist; und das Verfahren ferner Folgendes umfasst:
Empfangen einer siebten Eingabe für das Größensteuerelement des ersten Anwendungs-Widgets; und
Anpassen der Größe des ersten Anwendungs-Widgets als Reaktion auf die siebte Eingabe.

7. Anzeigeverfahren nach einem der Ansprüche 1 bis 6, wobei das Anzeigen von Anwendungs-Widgets in dem fünften voreingestellten Anzeigebereich und/oder von Anwendungs-Widgets in dem sechsten voreingestellten Anzeigebereich in einer gestapelten Form als Reaktion auf eine empfangene dritte Eingabe Folgendes umfasst:
wenn der Berührungsmeldepunkt in einem ersten Bereich einer Anzeige liegt, Anzeigen, in dem ersten Bereich, der Anwendungs-Widgets in dem fünften voreingestellten Anzeigebereich und/oder der Anwendungs-Widgets in dem sechsten voreingestellten Anzeigebereich in der gestapelten Form.

8. Anzeigeverfahren nach Anspruch 1, wobei die erste Schnittstelle ein Desktop-Hintergrundbild oder eine Anwendungsschnittstelle umfasst.

9. Elektronische Vorrichtung (100), umfassend einen Prozessor (110) und eine Speichervorrichtung (121), wobei die Speichervorrichtung (121) Programmanweisungen speichert und, wenn die Programmanweisungen durch den Prozessor (110) ausgeführt werden, die elektronische Vorrichtung (100) in die Lage versetzt wird, das Anzeigeverfahren nach einem der Ansprüche 1 bis 7 durchzuführen.

10. Computerlesbares Speichermedium, umfassend Computeranweisungen, wobei, wenn die Computeranweisungen auf einer elektronischen Vorrichtung ausgeführt werden, die elektronische Vorrichtung in die Lage versetzt wird, das Anzeigeverfahren nach einem der Ansprüche 1 bis 7 durchzuführen.

## Revendications

1. Procédé d'affichage d'un widget d'application, appliqué à un dispositif électronique (100), dans lequel le procédé comprend :
l'affichage d'un widget d'application dans une première zone d'affichage prédéfinie et l'affichage d'une première interface dans une deuxième zone d'affichage prédéfinie, dans lequel le widget d'application comprend un premier widget d'application et un deuxième widget d'application ;
en réponse à une première entrée reçue, le passage à un premier état d'édition pour le widget d'application, l'affichage du widget d'application dans une troisième zone d'affichage prédéfinie, l'affichage de la première interface dans une quatrième zone d'affichage prédéfinie, l'affichage d'une première commande à un premier emplacement de la troisième zone d'affichage prédéfinie et l'affichage d'une seconde commande à un second emplacement, dans lequel le premier emplacement correspond au premier widget d'application, le second emplacement correspond au deuxième widget d'application, la première commande est configurée pour régler le premier widget d'application, la seconde commande est configurée pour régler le deuxième widget d'application, la troisième zone d'affichage prédéfinie correspond à la première zone d'affichage prédéfinie et la quatrième zone d'affichage prédéfinie correspond à la deuxième zone d'affichage prédéfinie ; et
en réponse à une deuxième entrée reçue, le passage à un second état d'édition pour le widget d'application, l'affichage du widget d'application dans une cinquième zone d'affichage prédéfinie, et l'affichage, dans une sixième zone d'affichage prédéfinie, d'un widget d'application qui n'est pas ajouté à la première zone d'affichage prédéfinie, dans lequel la cinquième zone d'affichage prédéfinie correspond à la première zone d'affichage prédéfinie et la sixième zone d'affichage prédéfinie correspond à la deuxième zone d'affichage prédéfinie,
dans lequel le procédé comprend :
l'affichage de widgets d'application dans la cinquième zone d'affichage prédéfinie et/ou de widgets d'application dans la sixième zone d'affichage prédéfinie de manière empilée en réponse à une troisième entrée reçue, et
dans lequel l'affichage de widgets d'application dans la cinquième zone d'affichage prédéfinie et/ou de widgets d'application dans la sixième zone d'affichage prédéfinie de manière empilée en réponse à une troisième entrée reçue comprend :
l'obtention d'un ou de plusieurs points de rapport tactile de la troisième entrée ; et
le calcul de la distance entre le point de rapport tactile et un emplacement prédéfini sur un écran, et l'affichage des widgets d'application dans la cinquième zone d'affichage prédéfinie et/ou des widgets d'application dans la sixième zone d'affichage prédéfinie de manière empilée sur la base de la distance.

2. Procédé d'affichage selon la revendication 1, dans lequel le procédé comprend en outre :
en réponse à une quatrième entrée pour un troisième widget d'application affiché dans la sixième zone d'affichage prédéfinie, l'affichage du troisième widget d'application dans la cinquième zone d'affichage prédéfinie et l'ajustement des niveaux de gris du troisième widget d'application dans la sixième zone d'affichage prédéfinie ; ou
en réponse à une quatrième entrée pour un troisième widget d'application affiché dans la sixième zone d'affichage prédéfinie, l'affichage du troisième widget d'application dans la cinquième zone d'affichage prédéfinie et la suppression du troisième widget d'application affiché dans la sixième zone d'affichage prédéfinie.

3. Procédé d'affichage selon la revendication 2, dans lequel après l'affichage du troisième widget d'application dans la cinquième zone d'affichage prédéfinie, le procédé comprend en outre :
en réponse à une cinquième entrée reçue, la sortie du second état d'édition et l'affichage, dans la première zone d'affichage prédéfinie, du troisième widget d'application qui a été ajouté à la cinquième zone d'affichage prédéfinie.

4. Procédé d'affichage selon l'une quelconque des revendications 1 à 3, dans lequel
le réglage du premier widget d'application comprend : l'édition du contenu affiché du premier widget d'application, la suppression du premier widget d'application ou l'ajustement de la taille du premier widget d'application ; et
le réglage du deuxième widget d'application comprend : l'édition du contenu affiché du deuxième widget d'application, la suppression du deuxième widget d'application ou l'ajustement de la taille du deuxième widget d'application.

5. Procédé d'affichage selon la revendication 4, dans lequel la première commande est une commande d'édition ; et le procédé comprend en outre :
la réception d'une sixième entrée pour la commande d'édition du premier widget d'application ; et
l'affichage d'une page d'édition du premier widget d'application en réponse à la sixième entrée, dans lequel la page d'édition est utilisée pour éditer le contenu affiché du premier widget d'application.

6. Procédé d'affichage selon la revendication 4, dans lequel la première commande est une commande de taille ; et le procédé comprend en outre :
la réception d'une septième entrée pour la commande de taille du premier widget d'application ; et
l'ajustement de la taille du premier widget d'application en réponse à la septième entrée.

7. Procédé d'affichage selon l'une quelconque des revendications 1 à 6, dans lequel l'affichage de widgets d'application dans la cinquième zone d'affichage prédéfinie et/ou de widgets d'application dans la sixième zone d'affichage prédéfinie de manière empilée en réponse à une troisième entrée reçue comprend :
si le point de rapport tactile est situé dans une première zone d'un écran, l'affichage, dans la première zone, des widgets d'application dans la cinquième zone d'affichage prédéfinie et/ou des widgets d'application dans la sixième zone d'affichage prédéfinie de manière empilée.

8. Procédé d'affichage selon la revendication 1, dans lequel la première interface comprend un fond d'écran de bureau ou une interface d'application.

9. Dispositif électronique (100), comprenant un processeur (110) et un dispositif de stockage (121), dans lequel le dispositif de stockage (121) stocke des instructions de programme, et lorsque les instructions de programme sont exécutées par le processeur (110), le dispositif électronique (100) est activé pour réaliser le procédé d'affichage selon l'une quelconque des revendications 1 à 7.

10. Support de stockage lisible par ordinateur, comprenant des instructions informatiques, dans lequel, lorsque les instructions informatiques sont exécutées sur un dispositif électronique, le dispositif électronique est activé pour réaliser le procédé selon l'une quelconque des revendications 1 à 7.
